# EUROPEAN PATENT SPECIFICATION

(11) **EP 3 073 471 B1**
(45) Date of publication and mention of the grant of the patent: **20.06.2018**
(21) Application number: 14864040.2
(22) Date of filing: 07.08.2014
(51) Int. Cl.: G09F 3/06, G09F 3/00, G09F 3/02, B32B 27/32, B65D 23/08, B32B 27/08, B32B 7/02

(54) **STRETCH LABEL AND MANUFACTURING METHOD THEREFOR**
ELASTISCHES ETIKETT UND HERSTELLUNGSVERFAHREN DAFÜR
ÉTIQUETTE ÉTIRABLE ET SON PROCÉDÉ DE PRODUCTION

(30) Priority: 22.11.2013 JP 2013242218
(43) Date of publication of application: 28.09.2016
(73) Proprietor: Fuji Seal International, Inc., Osaka-shi, Osaka 532-0003 (JP)
(72) Inventor: BANNO, Shinji, Osaka-shi Osaka 532-0003 (JP); UMEDA, Hideaki, Osaka-shi Osaka 532-0003 (JP); MIYAZAKI, Akira, Osaka-shi Osaka 532-0003 (JP); KAMEO, Takahiro, Osaka-shi Osaka 532-0003 (JP); EISHIMA, Shuhei, Osaka-shi Osaka 532-0003 (JP)
(74) Representative: Grünecker Patent- und Rechtsanwälte PartG mbB
(86) International application number: PCT/JP2014/070898
(87) International publication number: WO 2015/075977

(56) References cited:
- EP-A1- 2 578 395
- WO-A1-2013/077333
- WO-A1-2013/100141
- WO-A2-2007/044544
- JP-A- 2000 056 690
- JP-A- 2005 221 982
- JP-A- 2008 062 493

## Description

### Technical Field

The present invention relates to stretch labels and production methods therefor. More specifically, the present invention relates to a stretch label that is suitable typically in uses in which the stretch label is attached to a beverage container; and to a method for producing the stretch label.

### Background Art

Plastic bottles such as PET bottles are now widely used as containers for beverages such as carbonated beverages. These containers are often equipped with plastic labels for labeling (indication), decoration, and/or functionalization. Typically, there are known stretch labels each including a stretch film as a base, where the stretch film has excellent elasticity. Each stretch label is attached to an objective article such as a container typically in the following manner. The stretch label is formed into a cylindrical shape to give a stretch sleeve label having a diameter equal to or slightly smaller than the diameter of the objective article. The stretch sleeve label is extended (elongated) by an external force and is fitted onto the objective article. The external force is then released, and this allows the label to contract (spontaneously contract) and to be attached to the objective article. The stretch labels require extensibility (elongation properties) and resilience at excellent levels.

A known example of the stretch labels is a stretch label using a film for stretch labels (see Patent Literature (PTL) 1). The film includes a linear low-density polyethylene having a density of 0.905 to 0.940 g/cm³ and has a thickness of 30 to 150 µm, where the linear low-density polyethylene is polymerized using a single-site metallocene catalyst. The film has a strain of not greater than 7% at zero stress and has a permanent set of not greater than 1.5%. The strain at zero stress and the permanent set are determined based on the measurement of a hysteresis curve at 25% or less, where the hysteresis curve is plotted when the film is deformed laterally at a rate of 300 mm/min.

### Citation List

### Patent Literature

PTL 1: Japanese Unexamined Patent Application Publication No. H09-297539

### Summary of Invention

### Technical Problem

Among the containers and other objective articles to which the stretch labels are to be attached, those having complicated shapes, such as PET bottles having a large difference in diameter in the barrel, occupy larger and lager proportions. The stretch labels require still more excellent stretch properties (extensibility and resilience) so as to conform to objective articles and to offer excellent fittability even when the objective articles to which the stretch labels are to be attached have complicated shapes.

To meet the requirements, the inventors of the present invention made attempts to produce a stretch label by preparing a stretch film from a softer resin (e.g., a polyethylene resin having a lower density) as compared with conventional equivalents, so as to allow the stretch label to have better stretch properties. However, the inventors found that the stretch film using the soft resin elongates in the machine direction (MD) upon formation of a print layer using a printing machine such as a gravure printing machine; and that the elongation of the film disadvantageously impedes registration in printing, impedes the printing itself, and causes the stretch label to be produced with lower producibility. The inventors also found that the stretch label obtained using the stretch film is disadvantageously susceptible to breakage typically in a process of transporting the stretch label after being attached to the objective article. In contrast, a stretch label produced from a stretch film using a hard resin (e.g., a high-density polyethylene) is resistant to breakage and to reduction in producibility, but disadvantageously suffers from reduction in stretch properties. Accordingly, it has been difficult to provide a stretch label that meets all the requirements for stretch properties, producibility, and resistance to breakage (breakage resistance) all at excellent levels.

Specifically, the present invention has an object to provide a stretch label that has excellent stretch properties and still offers producibility and breakage resistance at excellent levels.

### Solution to Problem

After intensive investigations to achieve the object, the inventors have found a stretch label including a specific stretch film. The stretch film includes a base layer part and surface layers disposed on or over both sides of the base layer part. The base layer part has a multilayer configuration including 3 to 65 layers that contain a polyethylene resin as a principal component and independently have a density within a specific range. Each of the layers containing a polyethylene resin as a principal component and having a density within a specific range differs in density from another adjacent one. The inventors have found that this stretch label has excellent stretch properties and still offers producibility and breakage resistance at excellent levels. The present invention has been made based on these findings.

Specifically, the present invention provides a stretch label including a stretch film. The stretch film includes a base layer part, and surface layers disposed on or over both sides of the base layer part. The base layer part includes 3 to 65 layers E. The layers E each contain a polyethylene resin in a content in the layer of 60% by weight or more and independently have a density of 0.850 to 0.945 g/cm³. Each of the layers E in the base layer part differs in density from another adjacent layer E.

In the stretch label, the layers E in the base layer part may include at least one layer A and at least one layer B. The layer A contains a polyethylene resin in a content in the layer of 60% by weight or more and has a density of 0.850 to 0.930 g/cm³. The layer B contains a polyethylene resin in a content in the layer of 60% by weight or more and has a density of 0.945 g/cm³ or less, where the density of the layer B is higher than the density of the layer A by 0.005 g/cm³ or more. The base layer part may have two or more interfaces each between an adjacent pair of the layer A and the layer B.

In the stretch label, the layers E in the base layer part may include the layer A and the layer B disposed in alternate order in a total number of 3 to 65.

In the stretch label, the surface layers may be layers each containing a polyethylene resin in a content in the layer of 60% by weight or more and having a density of 0.900 to 0.945 g/cm³.

The present invention further provides a method for producing the stretch label. The method includes the step of preparing the stretch film. The step of preparing the stretch film includes a first substep, a second substep, and a third substep. In the first substep, a material (a) to form the layer A, a material (b) to form the layer B, and a material (c) to form the surface layers are independently melted. In the second substep, the material (a) and the material (b) each melted in the first substep are stacked on each other to form a multilayer assembly. In the third substep, the material (c) melted in the first substep is stacked on both sides of the multilayer assembly formed in the second substep.

### Advantageous Effects of Invention

The stretch label according to the present invention includes a stretch film as a label base. The stretch film includes a base layer part, and surface layers disposed on or over both sides of the base layer part. The base layer part has a multilayer configuration including 3 to 65 layers, where each of the layers independently contains a polyethylene resin as a principal component and has a density within the specific range. Each of the layers containing a polyethylene resin as a principal component and having a density within a specific range differs in density from another adjacent one. The stretch label according to the present invention, as having this configuration, has extensibility and resilience both at excellent levels. The stretch film less elongates upon formation of a print layer. This allows the print layer to be easily formed at a suitable position to give the stretch label with excellent producibility. In addition, the stretch label is resistant to breakage typically in the step of transporting the resulting labeled article after attachment of the stretch label to the objective article. Consequently, the stretch label according to the present invention is particularly useful as a stretch label to be attached to an objective article having a complicated shape.

As used herein, the terms "extensibility" and "resilience" are also generically referred to as "stretch properties" or "elasticity". Although not limited, the term "extensibility" refers to such a property that the stretch film or the stretch label can be stretched, and/or refers to easiness to extend. The term "resilience" refers to such a property that the stretch film or the stretch label contracts (restitutes) by an elastic force when it is extended by an external force and then the external force is released. The term "spontaneous contraction" refers to such a phenomenon that, when the stretch film or the stretch label is extended by an external force and then the external force is released, the stretch film or the stretch label (spontaneously) contracts due to the resilience of the stretch film or the stretch label.

### Brief Description of Drawings

Fig. 1 is a schematic view (local sectional view) of a stretch label according to an embodiment of the present invention;
Fig. 2 is a schematic view (local sectional view) of a stretch label according to another embodiment of the present invention;
Fig. 3 is a schematic view (local sectional view) of a stretch label according to yet another embodiment of the present invention;
Fig. 4 is a schematic view of a stretch sleeve label as an embodiment of a stretch label according to the present invention;
Fig. 5 is a schematic view (enlarged view of the essential parts in a cross section taken along the line A-A' of Fig. 4) of the stretch sleeve label as the embodiment of the stretch label according to the present invention:
   Fig. 6 is a schematic view of a labeled container as a stretch label according to an embodiment of the present invention; and
   Fig. 7 is a schematic view of a case used in a case dropping test.

### Description of Embodiments

The stretch label according to the present invention includes a stretch film.

The stretch film (namely, stretch film included in the stretch label according to the present invention) is also referred to as a "stretch film in the present invention". The stretch label according to the present invention may further include one or more other layers than the stretch film in the present invention, within ranges not adversely affecting the advantageous effects of the present invention.

### Stretch Film

The stretch film in the present invention has surface layers disposed on or over both sides of a base layer part. Namely, the stretch film in the present invention includes a base layer part, and surface layers disposed on or over both sides of the base layer part. Specifically, the stretch film in the present invention has a layer configuration including the surface layer, the base layer part, and the surface layer disposed in this order. In the layer configuration, the surface layers are preferably directly disposed on the base layer part. The surface layers in the stretch film in the present invention may be identical layers or different layers. When the surface layers are different layers, the surface layers may be different typically in composition of resins constituting the surface layers and/or different in layer thickness. The stretch film in the present invention may further include one or more layers other than the base layer part and the surface layers, within ranges not adversely affecting the object of the present invention.

Non-limiting examples of the other layers than the base layer part and the surface layers include antistatic layers and anchor coat layers. The stretch film in the present invention may have undergone, on its surface, a common surface treatment as needed, such as corona discharge treatment, primer treatment, and/or flame treatment.

### Base Layer Part

The base layer part in the stretch film in the present invention includes 3 to 65 layers, where each of the layers independently contains a polyethylene resin in a content in the layer of 60% by weight or more and has a density of 0.850 to 0.945 g/cm³. The stretch film in the present invention, as including the base layer part, offers excellent stretch properties and still has strength at a certain level. This allows the stretch label according to the present invention to have stretch properties, producibility, and breakage resistance all at high levels.

The term "base layer part" refers to a portion between the surface layers in the stretch film in the present invention. The "layer containing a polyethylene resin in a content in the layer of 60% by weight or more and having a density of 0.850 to 0.945 g/cm³" is also referred to as a "layer E". The base layer part has a multilayered structure including layers E stacked on each other in a number of 3 to 65. Each of the layers E in the base layer part differs in density from another adjacent layer E. The base layer part may include one or more layers E that are not adjacent to another layer E. The base layer part may further include one or more layers other than the layers E, within ranges not adversely affecting the advantageous effects of the present invention, but is more preferably devoid of the other layers than the layers E.

The layers E each contain a polyethylene resin as an essential component. The layers E may independently contain each of different polyethylene resins alone or in combination.

As used herein, the term "polyethylene resin" refers to a polymer derived from a monomer component or components essentially including ethylene. Namely, the term "polyethylene resin" refers to a polymer including a constitutional unit (structural unit) derived from ethylene in molecule (per molecule). Non-limiting examples of the polyethylene resins include ethylene homopolymers; and copolymers (ethylene copolymers) each derived from monomer components essentially including ethylene and one or more monomer components (monomer components other than ethylene).

Non-limiting examples of the monomer components other than ethylene include α-olefins; vinyl monomers such as vinyl chloride; unsaturated carboxylic acids such as (meth)acrylic acid, maleic acid, fumaric acid, crotonic acid, itaconic acid, citraconic acid, and 5-norbornene-2,3-dicarboxylic acid; unsaturated carboxylic acid anhydrides such as maleic anhydride, citraconic anhydride, 5-norbornene-2,3-dicarboxylic anhydride, and tetrahydrophthalic anhydride; unsaturated carboxylic esters such as methyl (meth)acrylate, ethyl (meth)acrylate, propyl (meth)acrylate, butyl (meth)acrylate, 2-ethylhexyl (meth)acrylate, 2-hydroxyethyl (meth)acrylate, 3-hydroxypropyl (meth)acrylate, glycidyl (meth)acrylate, monoethyl maleate, and diethyl maleate; unsaturated amides or imides, such as acrylamide, methacrylamide, and maleimide; unsaturated carboxylic acid salts such as sodium (meth)acrylate and zinc (meth)acrylate. Each of different monomer components other than ethylene may be used alone or in combination.

Non-limiting examples of the α-olefin include C₃-C₂₀ α-olefins such as propylene, 1-butene, 1-pentene, 4-methyl-1-pentene, 1-hexene, 1-heptene, 1-octene, 1-nonene, and 1-decene, of which C₄-C₈ α-olefins are preferred. Each of different α-olefins may be used alone or in combination.

Examples of the ethylene copolymers include, but are not limited to, ethylene-α-olefin copolymers each derived from monomer components essentially including ethylene and one or more α-olefins; ethylene-vinyl acetate copolymers (EVAs); ethylene-carboxylic acid copolymers such as ethylene-acrylic acid copolymers (EAAs) and ethylene-methacrylic acid copolymers (EMAAs); and ethylene-carboxylic ester copolymers such as ethylene-ethyl acrylate copolymers (EEAs) and ethylene-methyl methacrylate copolymers (EMMAs).

The polyethylene resin may also be a metallocene-catalyzed polyethylene resin, which is a polyethylene resin prepared via polymerization using a metallocene catalyst. The metallocene catalyst may be selected from known or common metallocene catalysts for olefin polymerization.

Non-limiting examples of the polyethylene resin include low-density polyethylenes (LDPEs) and linear low-density polyethylenes (LLDPEs). The "LDPE" refers to a polyethylene that includes a constitutional unit derived from ethylene, is produced by a high-pressure process, and has a low density of about 0.850 to about 0.945 g/cm³. The "LLDPE" refers to a polyethylene that includes a constitutional unit derived from ethylene, is produced by a medium- or low-pressure process, includes short-chain branches, and has a low density of about 0.850 to about 0.945 g/cm³.

The polyethylene resins in the layers E are not limited, but are preferably selected from ethylene homopolymers and ethylene-α-olefin copolymers. The polyethylene resins are preferably selected from LDPEs and LLDPEs, and more preferably selected from LLDPEs. The polyethylene resins in the layers E are more preferably selected from metallocene-catalyzed polyethylene resins, which are polyethylene resins prepared via polymerization using a metallocene catalyst, and particularly preferably selected from metallocene-catalyzed LLDPEs such as metallocene-catalyzed ethylene-α-olefin copolymers. These are preferred from the viewpoint of film-formability/workability.

The content of the constitutional unit derived from ethylene based on the total amount (100% by weight) of the polyethylene resin in each layer E, namely, the content of ethylene based on the total amount (100% by weight) of all monomer components constituting the polyethylene resin in each layer E is not limited, but is preferably 50% by weight or more, more preferably 70% by weight or more, furthermore preferably 80% by weight or more, and particularly preferably 85% by weight or more. The range is preferred from the viewpoint of elasticity. The content of the constitutional unit(s) derived from α-olefin(s) based on the total amount (100% by weight) of the ethylene-α-olefin copolymer, namely, the content of α-olefin(s) based on the total amount (100% by weight) of all monomer components constituting the ethylene-α-olefin copolymer is not limited, but is preferably from greater than 0% by weight to 50% by weight, more preferably 1% to 30% by weight, and particularly preferably 1% to 15% by weight. The range is preferred from the viewpoint of elasticity.

The total content of the constitutional unit derived from ethylene and the constitutional unit(s) derived from α-olefin(s) is not limited, but is preferably 80% by weight or more, more preferably 90% by weight or more, and particularly preferably 95% by weight or more, based on the total amount (100% by weight) of the polyethylene resin.

The polyethylene resins to be contained in the layers E may also be selected from commercial products. Such commercial products are available in the market and are exemplified by metallocene-catalyzed LLDPEs such as UMERIT 4540F, UMERIT 3540F, UMERIT 2540F, UMERIT 1540F, UMERIT 0540F, UMERIT 2040FC, UMERIT 1520F, UMERIT 0520F, and UMERIT 715FT each from UBE-MARUZEN POLYETHYLENE CO., LTD., and Evolue SP0540, Evolue SP1540, Evolue SP1520, and Evolue SP2040 each from Prime Polymer Co., Ltd.; metallocene-catalyzed ethylene/α-olefin copolymers such as KERNEL KF260T, KERNEL KF360T, KERNEL KF380, and KERNEL KS340T each from Japan Polyethylene Corporation; LDPEs such as F234 from UBE-MARUZEN POLYETHYLENE CO., LTD.; and EVAs such as V206 from UBE-MARUZEN POLYETHYLENE CO., LTD., and NOVATEC EVA Series from Japan Polyethylene Corporation.

The content of the polyethylene resin in each layer E is 60% by weight or more and is preferably 80% by weight or more, and furthermore preferably 90% by weight or more, based on the total weight (100% by weight) of the layer E. The upper limit of the content is not limited, but is 100% by weight, and may be 98% by weight. The layer E, if containing the polyethylene resin in a content less than 60% by weight, may have insufficient elasticity. The "content of the polyethylene resin" refers to the total content of all the polyethylene resins contained in the layer E (one layer E).

The layers E may each independently further contain one or more additives within ranges not adversely affecting the advantageous effects of the present invention. Non-limiting examples of the additives include lubricants, fillers, thermal stabilizers, antioxidants, ultraviolet absorbers, antistatic agents, anti-fogging agents, flame retardants, and colorants.

The density of each layer E is 0.850 to 0.945 g/cm³, and is preferably 0.870 to 0.940 g/cm³, and more preferably 0.890 to 0.935 g/cm³. The layers E, if having a density lower than 0.850 g/cm³, cause the base layer part to be excessively soft. This causes the stretch film to more readily elongates upon the formation of a print layer on the stretch film and causes the stretch label to be produced with lower producibility. In addition, this stretch label has lower strength to offer lower breakage resistance. In contrast, the layers E, if having a density higher than 0.945 g/cm³, causes the stretch label to have lower stretch properties.

The number of the layers E in the base layer part is 3 to 65 and is preferably 5 to 33, and more preferably 9 to 33. The base layer part, if including less than three layers E, less effectively causes the stretch film to have higher strength due to the multilayer structure of the base layer part, and causes the stretch label to be produced with lower producibility and/or to have lower breakage resistance. This is probably because of a small number of an interface (interface between two layers) in the base layer part.

In contrast, the base layer part, if including more than sixty-five (65) layers E, includes the layers E with an excessively small thickness (thickness per layer) when the stretch film is controlled to have a thickness (total thickness) within such a range as to be suitable to constitute a stretch label. This causes the stretch film and the stretch label to offer lower resilience. In addition, the stretch film may become iridescent.

The layers E in the base layer part are preferably, but not limitatively, disposed on each other without the medium of another layer (e.g., an adhesive layer).

When the layers E in the base layer part are adjacent to each other (disposed on each other without the medium of another layer), each of the layers E differs in density from another adjacent layer E. The difference in density of each layer E from another adjacent layer E contributes to better producibility and better breakage resistance of the stretch label. This is probably because the difference causes the interface between one layer E and another adjacent layer E to have a greater effect and thereby allows the stretch film to have higher strength. The difference in density between adjacent layers E is not limited, but is preferably 0.005 g/cm³ or more, and more preferably 0.009 g/cm³ or more.

The base layer part may have a density not limited, but preferably 0.890 to 0.940 g/cm³, more preferably 0.900 to 0.930 g/cm³, and particularly preferably 0.910 to 0.925 g/cm³. The base layer part, when having a density of 0.890 g/cm³ or more, does not become excessively soft. This configuration advantageously eliminates or minimizes easiness of the stretch film to elongate upon the formation of a print layer on the stretch film and eliminates or minimizes reduction in producibility of the stretch label. The configuration also advantageously eliminates or minimizes reduction in breakage resistance accompanied with reduction in strength of the stretch label. In contrast, the base layer part, when having a density of 0.940 g/cm³ or less, advantageously eliminates or minimizes reduction in stretch properties of the stretch label.

### Preferred Embodiments of Base Layer Part

The base layer part preferably, but not limitatively, includes at least one layer A and at least one layer B as the layers E. The layer A is a layer that contains a polyethylene resin in a content in the layer of 60% by weight or more and has a density of 0.850 to 0.930 g/cm³. The layer B is a layer that contains a polyethylene resin in a content in the layer of 60% by weight or more and has a density of 0.945 g/cm³ or less, where the density of the layer B is higher than the density of the layer A by 0.005 g/cm³ or more. The base layer part preferably includes the layer A and the layer B disposed adjacent to each other and preferably has two or more interfaces between an adjacent pair of the layer A and the layer B.

As used herein, the "layer A" refers to the "layer that contains a polyethylene resin in a content in the layer of 60% by weight or more and has a density of 0.850 to 0.930 g/cm³".

The "layer B" refers to the "layer that contains a polyethylene resin in a content in the layer of 60% by weight or more and has a density of 0.945 g/cm³ or less, where the density of the layer B is higher than the density of the layer A by 0.005 g/cm³ or more". The base layer part that includes at least one layer A and at least one layer B as the layers E, and has two or more interfaces between an adjacent pair of the layer A and the layer B is also referred to as a "base layer part according to the preferred embodiment".

The density of the layer A in terms of lower limit is 0.850 g/cm³ or more, and is preferably 0.870 g/cm³ or more, and more preferably 0.890 g/cm³ or more. The density of the layer A in terms of upper limit is 0.930 g/cm³ or less, and is preferably 0.925 g/cm³ or less, and more preferably 0.920 g/cm³ or less. The layer A, as having a density of 0.850 g/cm³ or more, allows the base layer part to resist becoming excessively soft. This configuration advantageously eliminates or minimizes reduction in breakage resistance and producibility of the stretch label. In contrast, the layer A, as having a density of 0.930 g/cm³ or less, advantageously eliminates or minimizes reduction in stretch properties of the stretch label.

The density of the layer B is higher than the density of the layer A by 0.005 g/cm³ or more, and preferably by 0.009 g/cm³ or more. The density of the layer B in terms of upper limit is 0.945 g/cm³ or less, and is preferably 0.940 g/cm³ or less, and more preferably 0.935 g/cm³ or less. The density of the layer B in terms of lower limit is not limited, as long as being higher than the density of the layer A by 0.005 g/cm³ or more, but is preferably 0.900 g/cm³ or more, more preferably 0.905 g/cm³ or more, and furthermore preferably 0.910 g/cm³ or more. The layer B, as having a density higher than the density of the layer A by 0.005 g/cm³ or more, advantageously more readily effectively contributes to higher strength due to multilayer lamination, when the layer A and layer B are disposed adjacent to each other. This is probably because the interface between the layer A and the layer B is formed distinctly when the layer A and the layer B are stacked on each other typically by coextrusion. If the difference in density between the layer A and the layer B is less than 0.005 g/cm³, adjacent layers are more easily mixed with each other to form a disordered interface between the layers when the layer A and the layer B are disposed adjacent to each other and when these layer are stacked on each other typically by coextrusion. This may cause the multilayer lamination to less effectively offer higher strength. The layer B, as having a density of 0.945 g/cm³ or less, advantageously eliminates or minimizes reduction in stretch properties of the stretch label.

The difference in density between the layer A and the layer B ((layer B density) minus (layer A density)) is not limited, but is preferably 0.005 g/cm³ or more, and more preferably 0.009 g/cm³ or more.

In the base layer part according to the preferred embodiment, the number of interfaces each between an adjacent pair of the layer A and the layer B is 2 or more, and is preferably 4 or more, and more preferably 8 or more. The base layer part, as having the interfaces in a number of 2 or more, more readily effectively has higher strength due to multilayer lamination, and this advantageously allows the stretch label to have better breakage resistance and better producibility.

The number of the layer A in the base layer part according to the preferred embodiment is 1 or more (e.g., 1 to 33), preferably 2 or more (e.g., 2 to 17), and more preferably 3 or more (e.g., 3 to 17). Though not limited, the number of the layer B in the base layer part according to the preferred embodiment is 1 or more (e.g., 1 to 33), preferably 2 or more (e.g., 2 to 17), and more preferably 3 or more (e.g., 3 to 17). The total number of the layer A and the layer B is not limited, but is preferably 3 to 65, more preferably 5 to 33, and furthermore preferably 9 to 33.

The base layer part according to the preferred embodiment may further include one or more layers other than the layers E (layers other than the layers A and the layers B). The base layer part according to the preferred embodiment is preferably, but not limitatively, devoid of layers E other than the layers A and the layers B. Namely, every layer E in the base layer part is preferably the layer A or the layer B.

Though not limited, in the base layer part according to the preferred embodiment, every layer E is preferably the layer A or the layer B, and the layer A and the layer B are preferably disposed in alternate order. The layer A and the layer B are more preferably disposed directly on each other in alternate order without the medium of any other layer. The direct lamination of the layer A and the layer B on each other (adjacent arrangement of the layer A and the layer B) forms an interface between the layer A and the layer B, and this advantageously contributes to higher strength of the stretch film in the present invention and the stretch label according to the present invention. The presence of two or more interfaces each between an adjacent pair of the layer A and the layer B advantageously contributes to still higher strength of the stretch film in the present invention and the stretch label according to the present invention.

The multilayer configuration of the base layer part according to the preferred embodiment is not limited, but is exemplified by multilayer configurations each including a constitutional repeating unit of "layer A/layer B", such as multilayer configurations of (layer A/layer B/layer A/layer B/.../layer A/layer B/layer A), (layer B/layer A/layer B/layer A/.../layer B/layer A/layer B), (layer A/layer B/layer A/layer B/.../layer A/layer B), and (layer B/layer A/layer B/layer A/.../layer B/layer A/layer B/layer A). In the multilayer configurations, the layer A and the layer B are preferably disposed on each other without the medium of any other layer. In addition, the layer B is preferably disposed adjacent to at least one side of every layer A.

In the base layer part according to the preferred embodiment, all the layers A are preferably formed from an identical material; and all the layers B are preferably formed from an identical material. Specifically, it is preferred that every layer A is formed from an identical material; and every layer B is formed from an identical material. Namely, it is preferred that all the layer A are layers having a composition identical to each other; and all the layers B are layers having a composition identical to each other.

### Surface Layers

The surface layers in the stretch film in the present invention are layers (resin layers) disposed on or over both sides of the base layer part.

The surface layers are not limited, as long as they are resin layers having stretch properties, and as long as a print layer can be formed on the resin layers. The resin contained in the surface layers is not limited, but may be selected from thermoplastic resins including polyolefin resins, styrenic elastomers such as styrene-butadiene elastomers, and other thermoplastic elastomers. Among them, polyolefin resins are preferred. Each of different resins may be used alone or in combination.

Non-limiting examples of the polyolefin resins include polyethylene resins; polymers (polypropylene resins) derived from one or more monomer components essentially including propylene; ionomers; and cycloolefin polymers. Among them, polyethylene resins are preferred from the viewpoints of stretch properties and producibility. Each of different polyolefin resins may be used alone or in combination.

The polyethylene resin which may be contained in the surface layers is not limited, but is preferably selected from ethylene homopolymers, ethylene-α-olefin copolymers, and EVAs, and particularly preferably selected from ethylene homopolymers and ethylene-α-olefin copolymers. The polyethylene resin which may be contained in the surface layers is preferably selected from LDPEs, LLDPEs, and EVAs, and more preferably selected from LLDPEs. In particular, of the LLDPEs, preferred are metallocene-catalyzed LLDPEs, which are LLDPEs prepared via polymerization using a metallocene catalyst. The metallocene-catalyzed LLDPEs are preferred because they have uniform molecular weights, readily have resin flow stability, and offer high film-formability/workability. When the surface layers contain an EVA, the content of the vinyl acetate component (VA component) is preferably 1% to 10% by weight based on the total weight (100% by weight) of the surface layers. Each of different polyethylene resins may be used alone or in combination.

The content of the constitutional unit derived from ethylene in the polyethylene resin (100% by weight) which may be contained in the surface layers, namely, the content of ethylene in all the monomer components (100% by weight) constituting the polyethylene resin is not limited, but is preferably 50% by weight or more, and more preferably 70% to 99% by weight. The range is preferred from the viewpoint of elasticity. The content of the constitutional unit(s) derived from the α-olefin(s) in the ethylene-α-olefin copolymer (100% by weight), namely, the content of the α-olefin(s) in all the monomer components (100% by weight) constituting the ethylene-α-olefin copolymer is not limited, but preferably from greater than 0% by weight to 50% by weight, and more preferably 1% to 30% by weight. The range is preferred from the viewpoint of elasticity. The content of a constitutional unit(s) derived from a monomer component(s) other than the ethylene and the α-olefins in the ethylene-α-olefin copolymer (100% by weight) is not limited, but is preferably 10% by weight or less, and more preferably 5% by weight or less.

The polyethylene resin which may be contained in the surface layer may also be selected from commercial products. As such commercial products, for example, the polyethylene resins exemplified and described as the commercial products of the polyethylene resin to be contained in the layers E are available in the market.

Each of the surface layers may contain the polyolefin resin in a content of preferably 60% by weight or more, more preferably 80% by weight or more, and furthermore preferably 90% by weight or more, based on the total weight (100% by weight) of the surface layer. The upper limit of the content is not limited, but is 100% by weight, and may be 98% by weight. Each of the surface layers, when containing the polyolefin resin in a content of 60% by weight or more, advantageously contributes to better breakage resistance and better producibility without adversely affecting elasticity. The "content of the polyolefin resin" refers to the total content of all the polyolefin resins contained in each surface layer.

The surface layers may each contain one or more additives within ranges not adversely affecting the advantageous effects of the present invention. Non-limiting examples of the additives include lubricants, fillers, thermal stabilizers, antioxidants, ultraviolet absorbers, antistatic agents, anti-fogging agents, flame retardants, and colorants.

The surface layers may each have a density not limited, but preferably 0.900 to 0.945 g/cm³, more preferably 0.910 to 0.940 g/cm³, and furthermore preferably 0920 to 0.935 g/cm³. The surface layers, when having a density of 0.900 g/cm³ or more, advantageously have suitable hardness and do not adversely affect breakage resistance. In addition, these surface layers advantageously allow the stretch film in the present invention to less elongate upon the formation of a print layer on the stretch film and to give the stretch label according to the present invention with better producibility. In contrast, the surface layers, if having a density higher than 0.945 g/cm³, may cause the stretch label to have lower stretch properties.

### Configuration, Properties, and Other Factors of Stretch Film in the Present Invention

The stretch film in the present invention includes the base layer part and the surface layers. The surface layers are respectively disposed on or over both sides of the base layer part, namely, one of the surface layers is disposed on or over one side of the base layer part, and the other surface layer is disposed on or over the other side of the base layer part.

The stretch film in the present invention may contain polyethylene resins in a content not limited, but preferably 70% by weight or more, more preferably 80% by weight or more, and furthermore preferably 90% by weight or more, based on the total weight (100% by weight) of the stretch film in the present invention. The upper limit of the content is not limited, but may be 100% by weight, or may be 98% by weight. The stretch film, when containing the polyethylene resins in a content of 70% by weight or more, advantageously offers better elasticity. The "content of the polyethylene resins" refers to the total content of all the polyethylene resins contained in the stretch film in the present invention.

The stretch film in the present invention may have a density not limited, but preferably 0.900 to 0.940 g/cm³, more preferably 0.910 to 0.930 g/cm³, and furthermore preferably 0.915 to 0.925 g/cm³. When having a density of 0.900 g/cm³ or more, the stretch film (particularly the base layer part) does not become excessively soft. This advantageously eliminates or minimizes reduction in breakage resistance and producibility of the stretch label. In contrast, the stretch film, when having a density of 0.940 g/cm³ or less, advantageously allows the stretch label to resist reduction in stretch properties.

The stretch film in the present invention may have a thickness (total thickness) not limited, but preferably 10 to 100 µm, more preferably 20 to 60 µm, and furthermore preferably 25 to 50 µm. The stretch film, when having a thickness of 10 µm or more, has high strength and advantageously contributes to better producibility and better breakage resistance of the stretch label. The stretch film, when having a thickness of 100 µm or less, advantageously allows the stretch label to be more readily extended and to have better stretch properties. Though not limited, the present invention significantly effectively contributes to better producibility of a stretch label when the stretch label includes a relatively thin stretch film. This is because such a relatively thin stretch film may readily elongate upon the formation of a print layer, and this may readily cause lower productivity.

The surface layers may each have a thickness (thickness per layer) not limited, but preferably 1 to 13 µm, more preferably 2 to 7.5 µm, and furthermore preferably 2.5 to 6.5 µm. The surface layers, when having a thickness within the range, advantageously sufficiently offer the effects of providing the surface layers. The individual surface layers in the stretch film in the present invention may have an identical thickness or different thicknesses.

The base layer part may have a thickness not limited, but preferably 8 to 80 µm, more preferably 10 to 50 µm, and furthermore preferably 15 to 40 µm. The base layer part, when having a thickness within the range, advantageously allows the stretch label to have better stretch properties and to offer better producibility and breakage resistance significantly effectively.

The layers E may each have a thickness (thickness per layer) not limited, but preferably 0.5 µm or more, and more preferably 1 µm or more. The layers E, if having a thickness per layer of less than 0.5 µm, may lose their hardness, and this may cause the stretch label to suffer from reduction in producibility and/or breakage resistance. The thicknesses of the plurality of the layers E in the stretch film in the present invention may be partially or entirely identical to one another, or different from one another.

The layer(s) A may have a thickness (thickness per layer) not limited, but preferably 0.5 µm or more, and more preferably 1 µm or more. The layer(s) A, if having a thickness per layer less than 0.5 µm, may lose hardness inherent to the resin, and this may cause the stretch label to suffer from reduction in producibility and/or breakage resistance. When the stretch film in the present invention includes two or more layers A, the thicknesses of the layers A may be partially or entirely identical to each other, or may be different from each other.

The layer(s) B may have a thickness (thickness per layer) not limited, but preferably 0.5 µm or more, and more preferably 1 µm or more. The layer(s) B, if having a thickness per layer less than 0.5 µm, may lose hardness inherent to the resin, and this may cause the stretch label to suffer from reduction in producibility and/or breakage resistance. When the stretch film in the present invention includes two or more layers B, the thicknesses of the layers B may be partially or entirely identical to each other, or may be different from each other.

In the stretch film in the present invention, the ratio of the thickness of the surface layers (total thickness of all the surface layers) to the thickness of the base layer part is not limited, but is preferably less than 1:1 (the thickness of the base layer part is preferably greater than the total thickness of the surface layers), more preferably from 1:10 to 1:1.5, and furthermore preferably from 1:5 to 1:2. If the ratio is greater than 1:1 (if the total thickness of the surface layers is greater than the thickness of the base layer part), the present invention may offer smaller advantageous effects.

In the base layer part according to the preferred embodiment, the ratio of the thickness of the layer(s) A (total thickness of all the layers A) to the thickness of the layer(s) B (total thickness of all the layers B) is not limited, but preferably from 1:10 to 10:1, more preferably from 1:6 to 6:1, and furthermore preferably from 1:4 to 4:1. If the ratio is greater than 10:1 (if the layers A have a total thickness greater than 10 times the total thickness of the layers B), the stretch label may have lower stretch properties. In contrast, if the ratio is less than 1:10 (if the layers B have a total thickness greater than 10 times the total thickness of the layers A), the stretch label may suffer from reduction in producibility and/or breakage resistance.

The stretch film in the present invention, when being transparent, may have a haze not limited, but preferably 10% or less, more preferably 7% or less, and furthermore preferably 5% or less. The haze is determined in conformity to JIS K 7136 in terms of 40 µm thickness and is indicated in percent (%). Assume that the stretch film has a haze greater than 10%; and that this stretch film is applied to a stretch label (back printed stretch label) in which a print is applied to an inner side of the stretch film, and the print is to be seen through the stretch film, where the inner side is a side which will face a container when the stretch label is attached to the container. When this stretch label is processed into a product, the print may look hazed, and the stretch label may offer inferior decorativeness. However, in other applications than the above one in which the print is to be seen through the stretch film, namely, in front printed stretch labels, the stretch film is allowed to be non-transparent. Thus, the stretch film, even when having a haze greater than 10%, is sufficiently usable in the other applications.

### Stretch Label

The stretch label according to the present invention includes the stretch film in the present invention. The stretch label according to the present invention may further include one or more layers other than the stretch film in the present invention. The stretch label according to the present invention has stretch properties in at least one direction and is extensible (stretchable) in one direction upon use.

### Other Layers than Stretch Film in Present Invention

The other layers which may be contained in the stretch label according to the present invention in addition to the stretch film in the present invention are not limited, but may be selected typically from print layers, adhesive layers (e.g., pressure-sensitive adhesive layers and heat-sensitive adhesive layers), protective layers, anchor coat layers, primer coating layers, coating layers, and antistatic layers.

### Print Layer

The print layer is not limited and may be selected from known or common print layers for use in stretch labels. Non-limiting examples of the print layers include designed print layers (e.g., color print layers) and background print layers. The designed print layers illustrate figures and designs typically of trade names, illustrations, and handling precautions. The background print layers are each indicated by a single color such as white. Though not limited, the print layer may be disposed on or over either one or both sides of the stretch film in the present invention. The print layer may be disposed entirely or partially on or over a surface (the surface on which the print layer is disposed) of the stretch film in the present invention. Though not limited, the print layer may be a single layer or a multilayer.

The print layer preferably, but not limitatively, contains a binder resin as an essential component and, as needed, further contains one or more additives such as coloring pigments, lubricants, dispersing agents, and antifoaming agents. Non-limiting examples of the coloring pigments include blue, red, yellow, black, and white pigments. The print layer may contain each of different binder resins alone or in combination and may contain each of different coloring pigments or any other additives alone or in combination.

The binder resins are not limited and may be selected typically from known or common resins for use as binder resins in print layers and printing inks. Non-limiting examples of the binder resins include acrylic resins, urethane resins, polyester resins, polyamide resins, cellulose resins (including nitrocellulose resins), and vinyl chloride-vinyl acetate copolymer resins. The coloring pigments are not limited and may be selected from known or common coloring pigments for use in print layers and printing inks. Non-limiting examples of the coloring pigments include white pigments such as titanium dioxide; cyan pigments such as copper phthalocyanine blue; and any other coloring pigments such as carbon black, aluminum flake, and mica. The coloring pigments may be selected and used according to the intended use. Examples of the coloring pigments also include extender pigments such as alumina, calcium carbonate, barium sulfate, silica, and acrylic beads. The extender pigments may be used for a purpose such as gloss adjustment.

The print layer may have a thickness not limited, but typically preferably 0.1 to 10 µm, and more preferably 0.3 to 5 µm. The print layer, if having a thickness less than 0.1 µm, may be difficult to be provided uniformly. Such a nonuniform print layer may suffer from partial "blur (poor print quality)" and may cause the stretch label to have inferior decorativeness. In addition, the nonuniform print layer may fail to be printed as designed. In contrast, the print layer, if having a thickness greater than 10 µm, may consume a large amount of the printing ink and may increase the cost. The excessively thick print layer may fail to be formed uniformly by coating, and/or may become brittle and become susceptible to peeling off, and/or may lead to lower stretch properties.

### Protective Layer

The protective layer is a layer that is disposed to protect the stretch film and/or the print layer. The protective layer is not limited and may be selected from known or common protective layers for use in stretch labels.

The protective layer is preferably, but not limitatively, a protective layer (protective coating layer) formed from (derived from) a coating composition. Though not limited, the protective layer may be disposed on or over either one or both sides of the stretch film in the present invention. Though not limited, the protective layer may be disposed on or over a surface of the print layer of the stretch film in the present invention, and/or on or over a surface of the stretch film in the present invention. The protective layer may be disposed entirely or partially on or over at least one side of the stretch film in the present invention.

When the printed indication or design of the print layer is to be seen through the protective coating layer, the protecting coating layer is preferably, but not limitatively, transparent. Though not limited, the protective coating layer, when being transparent, may be colored or colorless, but is preferably colorless.

The protective layer may have a thickness not limited, but typically preferably 0.1 to 10 µm.

The protective coating layer preferably, but not limitatively, contains a binder resin and a lubricant (e.g., a wax) as essential components. The protective coating layer may contain one or more additives as needed. The protective coating layer may contain each of different binder resins alone or in combination and may contain each of different lubricants alone or in combination.

The binder resins for use in the protective coating layer are not limited and may be selected typically from known or common resins for use as binder resins in coating layers and coating compositions. Non-limiting examples of the binder resins include the binder resins exemplified and described as binder resins in the print layer. The lubricants are not limited and may be selected typically from known or common lubricants for use in coating layers and coating compositions.

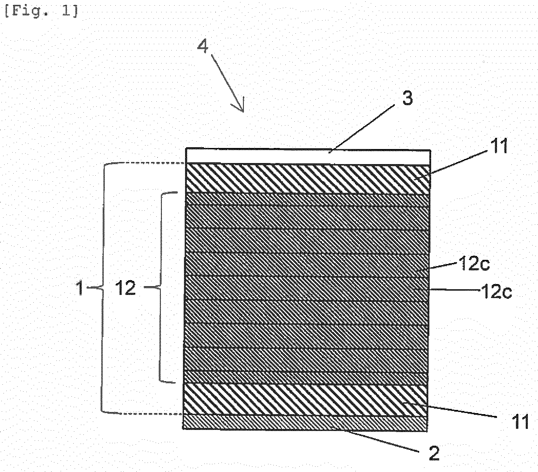

Figs. 1 to 3 are schematic views (local sectional views) of stretch labels according to embodiments of the present invention. The stretch label 4 according to the present invention illustrated in Fig. 1 includes a stretch film 1 in the present invention, a print layer 2, and a protective coating layer 3. The print layer 2 is disposed on one side of the stretch film 1 in the present invention. The protective coating layer 3 is disposed on the other side of the stretch film 1 in the present invention. The stretch film 1 in the present invention includes a base layer part 12 and surface layers 11. The surface layers 11 are respectively disposed on both sides of the base layer part 12 (one surface layer per side). The base layer part 12 is constituted by layers E 12c disposed on each other (adjacent to each other) in a total number of 9. Each of the layers E 12c differs in density from another adjacent layer E 12c. The surface layers 11 are disposed directly on the base layer part 12 without the medium of any other layer.

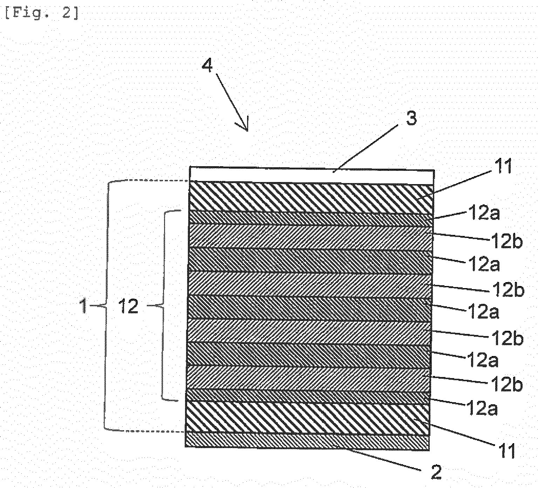

The stretch label 4 according to the present invention illustrated in Fig. 2 includes a stretch film 1 in the present invention, a print layer 2, and a protective coating layer 3. The print layer 2 is disposed on one side of the stretch film 1 in the present invention. The protective coating layer 3 is disposed on the other side of the stretch film 1 in the present invention. The stretch film 1 in the present invention includes a base layer part 12, and surface layers 11. The surface layers 11 are disposed on both sides of the base layer part 12 (one surface layer per one side). The base layer part 12 includes, as layers E, layers A 12a and layers B 12b. The base layer part 12 is constituted by the layers A 12a and the layers B 12b disposed on each other (adjacent to each other) in alternate order in a total number of 9, where outermost layers (layers in contact with the surface layers 11) of the base layer part 12 are the layers A 12a. The base layer part 12 has eight (8) interfaces each between an adjacent pair of the layer A 12a and the layer B 12b. The surface layers 11 are directly disposed on the base layer part 12 without the medium of any other layer. Specifically, the surface layers 11 are disposed directly, without the medium of any other layer, on the layers A 12a that constitute the outermost layers (outermost surfaces) of the base layer part 12.

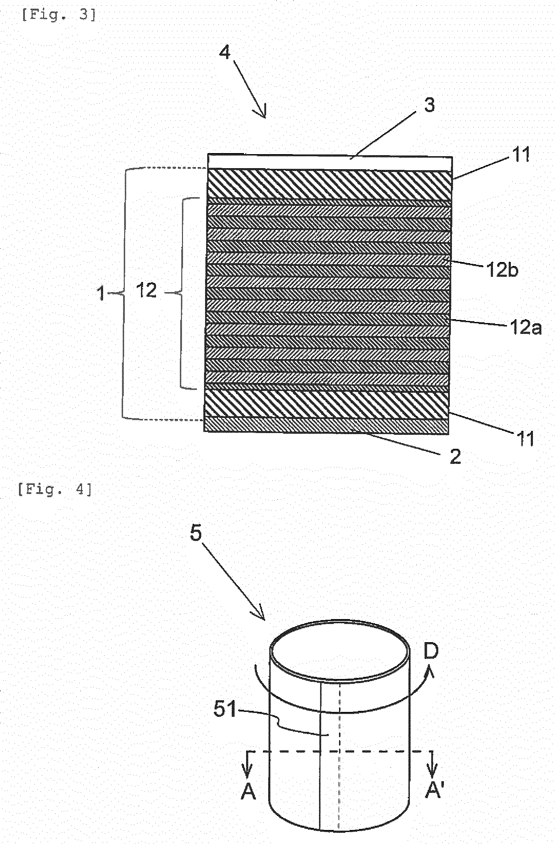

The stretch label 4 according to the present invention illustrated in Fig. 3 includes a stretch film 1 in the present invention, a print layer 2, and a protective coating layer 3. The print layer 2 is disposed on one side of the stretch film 1. The protective coating layer 3 is disposed on the other side of the stretch film 1. The stretch film 1 in the present invention includes surface layers 11 and a base layer part 12. The base layer part 12 is constituted by layers A 12a and layers B 12b disposed on (adjacent to) each other in alternate order in a total number of 17, where outermost layers (layers in contact with the surface layers 11) of the base layer part 12 are the layers A 12a. The base layer part 12 has sixteen (16) interfaces each between an adjacent pair of the layer A 12a and the layer B 12b. The stretch labels 4 according to the present invention illustrated in Figs. 2 and 3 may each have a reversed positional relationship. Specifically, the stretch labels 4 according to the present invention may each structurally include layers A 12a and layers B 12b disposed adjacent to each other in alternate order in a certain total number, the outermost layers of the base layer part are the layers B 12b.

The stretch label according to the present invention is preferably a cylindrical stretch label (stretch sleeve label). This is preferred from the viewpoint of easiness of attachment to the container. The stretch sleeve label is in sleeve form, in which both ends of the stretch label according to the present invention are sealed typically with a solvent or an adhesive, or sealed typically by heat sealing, where the resulting stretch sleeve label is to be fitted onto and attached to the container. This stretch sleeve label is hereinafter also referred to as a "stretch sleeve label according to the present invention".

### Properties of Stretch Label

Though not limited, the stretch properties (elasticity) of the stretch label herein may be adjusted typically by the after-mentioned "tensile stress at 10% strain" and/or "tensile stress at 60% strain" in at least one direction.
In particular, the extensibility may be adjusted by the "tensile stress at 10% strain" and/or the "tensile stress at 60% strain" in at least one direction; and the resilience may be adjusted by the "residual strain after 60% extension". Herein, the "tensile stress at 10% strain" is also referred to as an "F10 value", and the "tensile stress at 60% strain" is also referred to as an "F60 value".

The stretch label according to the present invention may have a residual strain after 60% extension not limited, but preferably 15% or less, more preferably 13% or less, and furthermore preferably 12.5% or less, in at least one direction. The residual strain after 60% extension is measured by the after-mentioned stretch test. The stretch label, if having a residual strain of greater than 15% after 60% extension, may offer lower resilience when the stretch label is highly extended. This stretch label may fail to sufficiently conform to an objective article (such as a container) having a complicated shape and may be attached inferiorly. For example, the resulting labeled article may have a poor appearance. As used herein the term "60% extension" refers to that the sample stretch label is extended to a length of 160, assuming that the stretch label has an initial length of 100.

The lower limit of the residual strain after 60% extension is preferably 0%.

### Stretch Test

The test is performed using a tensile tester under temperature and humidity conditions of a temperature of 23°C ±2°C and relative humidity of 50% ±5% (% RH). A measurement sample (test specimen) is pulled in a measurement direction (tensile direction) at a tensile speed (testing speed) of 50 mm/min. to an elongation of 60%, namely, the measurement sample is extended by 60%. Next, immediately after the elongation reached 60%, the external force is released. Namely, the chucks (clamping jaws) of the tensile tester are moved in a direction (unloading direction) opposite to the tensile direction at a speed of 50 mm/min. Thus, the measurement sample is allowed to contract (spontaneously contract). Elongation and tensile stress are measured using the tensile tester. The elongation of the measurement sample at the point when the stress (tensile stress) in the measurement direction (tensile direction) becomes zero (0) in the process (unloading process) of allowing the measurement sample to contract is measured and defined as the "residual strain after 60% extension" of the measurement sample in the measurement direction.

The tensile tester is not limited, but is exemplified by Shimadzu Autograph (AGS-50G with a 500-N load cell) supplied by Shimadzu Corporation.

On testing conditions and any other factors, reference may be made to JIS K 7161 as needed.

The stretch label according to the present invention may have a tensile stress at 10% strain (F10 value) not limited, but preferably 1 to 10 MPa, more preferably 2 to 8 MPa, and furthermore preferably 3 to 7 MPa, in at least one direction. The stretch label according to the present invention may have a tensile stress at 60% strain (F60 value) not limited, but preferably 1 to 12 MPa, more preferably 2 to 10 MPa, and furthermore preferably 3 to 9 MPa, in at least one direction. The stretch label, if having an F10 value and/or an F60 value of less than 1 MPa, may be excessively soft and may offer lower producibility and/or may have lower breakage resistance. The stretch label, if having an F10 value of greater than 10 MPa and/or an F60 value of greater than 12 MPa, may be excessively hard and may have lower stretch properties.

The "tensile stress at 10% strain (F10 value)" refers to the tensile stress when the measurement sample is strained to a strain (elongation) of 10% (when the measurement sample is extended by 10%) in the measurement direction in the tensile test. The "tensile stress at 60% strain (F60 value)" refers to the tensile stress when the measurement sample is strained to a strain (elongation) of 60% (when the measurement sample is extended by 60%) in the measurement direction in the tensile test. The tensile tester for use in the tensile test is not limited, but is exemplified by Shimadzu Autograph (AGS-50G with a 500-N load cell) supplied by Shimadzu Corporation. On testing conditions and any other factors, reference may be made to JIS K 7161 as needed.

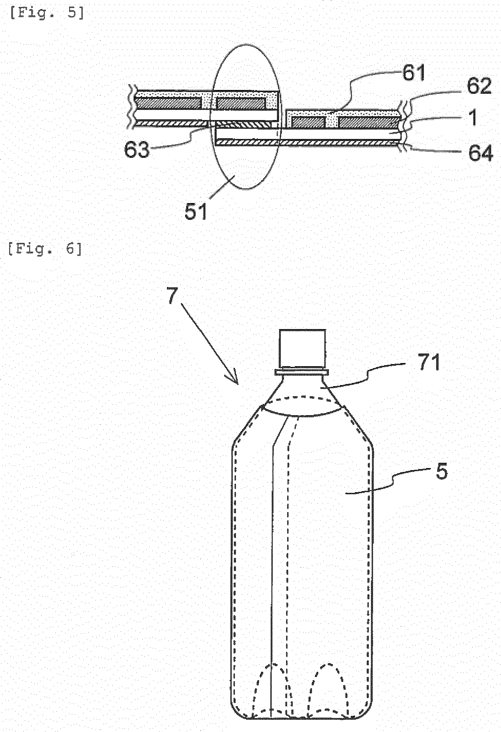

An exemplary stretch sleeve label as a preferred embodiment of the stretch label according to the present invention will be illustrated with reference to Figs. 4 and 5. The stretch sleeve label 5 according to the present invention illustrated in Fig. 4 is in sleeve form, in which one end of a stretch label according to the present invention including the stretch film in the present invention is overlapped with the outer surface of the other end of the stretch label, and the inner surface of the one end and the outer surface of the other end are bonded with each other typically with a solvent or an adhesive, or by heat sealing, at a seam 51. In the stretch sleeve label 5, the stretch label according to the present invention, which has been formed into rectangular form, is in sleeve form so that one direction (direction in which the stretch film has stretch properties) of the stretch film in the present invention constitutes the circumferential direction D of the stretch sleeve label. The stretch sleeve label 5 is extensible and contractible in the direction.

Fig. 5 is a cross-sectional view taken along the line A-A' of Fig. 4, namely, an enlarged view of the essential parts adjacent to the seam 51 of the stretch sleeve label 5 according to the present invention. Specifically, the stretch label according to the present invention includes the stretch film 1 in the present invention, a designed print layer 62, and a background print layer 61. The designed print layer 62 is disposed on one side (inner surface side of the sleeve) of the stretch film 1 in the present invention, excluding a region with a predetermined width from the extremity of one end of the stretch film 1. The background print layer 61 is disposed on the one side of the stretch film 1 almost entirely, excluding a region with a predetermined width from the extremity of the one end of the stretch film 1, so as to cover the designed print layer 62. The stretch sleeve label 5 according to the present invention also includes a protective coating layer 64. The protective coating layer 64 is disposed on the other side (outer surface side of the sleeve) of the stretch film 1, excluding a region with a predetermined width from the extremity of the other end of the stretch film 1. Thus, in the stretch label according to the present invention, the designed print layer 62 and the background print layer 61 are not disposed in the region with a predetermined width from the extremity of the one end. In the region, the stretch film 1 in the present invention is exposed to be a film-exposed surface. Also in the stretch label, the protective coating layer 64 is not disposed in the region with a predetermined width from the extremity of the other end. In the region, the stretch film is exposed to be a film-exposed surface. Specifically, in the stretch sleeve label 5 according to the present invention, the film-exposed surface disposed in the inner surface side of the one end of the stretch label according to the present invention and the film-exposed surface disposed in the outer surface side of the other end are bonded by heat sealing.

Thought not limited, the designed print layer is constituted by two or more print layers including different coloring pigments, where the two or more print layers are overlapped so as to give a desired indication such as trade names, illustrations, or handling precautions.

The background print layer is a print layer that constitutes the background of the designed print layer when the stretch sleeve label according to the present invention is observed from the outside of the sleeve. The background print layer may be constituted typically by a white print layer containing 20% to 60% by weight of titanium dioxide as a coloring pigment.

The designed print layer has a thickness of typically 0.1 to 5 µm, and the background print layer has a thickness of typically 0.5 to 5 µm. The print layer including the designed print layer and the background print layer has a total thickness of typically 1 to 10 µm.

The protective coating layer is a coating layer containing, for example, a lubricant in a content of 0.1% to 10% by weight based on the total weight of the protective coating layer. The protective coating layer has transparency so that the indication of the designed print layer disposed in the inner surface side of the sleeve can be visually observed.

The seam may have a width not limited, but preferably 0.2 to 10 mm, more preferably 0.3 to 5 mm, and furthermore preferably 0.4 to 2 mm.

The seam 51 in the preferred stretch sleeve label as above is illustrated as an envelope seam in which the inner surface of the one end is bonded to the outer surface of the other end. However, the seam 51 is not limited to this in bonding form. The seam 51 may be a butt seam in which the inner surfaces of the one end and the other end are bonded to each other, or the outer surfaces of the one end and the other end are bonded to each other, typically by heat sealing. Also in this case, the bonding is preferably performed while film-exposed surfaces disposed on the inner surface sides or in the outer surface sides are overlapped.

The stretch film in the present invention for use in the stretch label according to the present invention includes the base layer part that has a multilayer configuration and includes 3 to 65 layers, where each of the layers independently contains a polyethylene resin as a principal component and has a density within the specific range. The stretch film, as having this configuration, is relatively soft and offers extensibility and resilience both at excellent levels. Since using the stretch film in the present invention as above, the stretch label according to the present invention has excellent stretch properties, can be extended to a high stretch ratio, and offers high resilience even when it is extended to a high stretch ratio. The stretch label, when being extended to a high stretch ratio using the excellent stretch properties and attached to an objective article, can be attached to the objective article with high fittability (conformability), even when the objective article has a complicated shape.

The stretch film in the present invention includes a base layer part that has a multilayer configuration including layers in a number within the specific range. The base layer part of the stretch film in the present invention, as having this configuration, maintains high resilience and still less suffers from excessive easiness to elongate due to stress. This is probably because the base layer part has an increased number of interfaces between adjacent layers and effectively offers higher strength. The stretch film is therefore resistant to elongation due to stress applied upon formation of the print layer and upon transportation, and the stretch label according to the present invention offers excellent producibility. The stretch label can be prepared as having an excellent design.

In addition, the stretch film in the present invention has higher strength due to the configuration. This allows the stretch label according to the present invention to also have excellent breakage resistance. Thus, the stretch label resists breakage due to collision of labeled articles (e.g., bottles) with each other even when the label is attached to such bottles, and resulting labeled bottles are placed in a case and transported.

The stretch film in the present invention, when including the base layer part according to the preferred embodiment, includes the layer A and the layer B disposed adjacent to each other, where the layer A has a relatively low density, and the layer B has a higher density as compared with the layer A. Thus, the stretch label according to the present invention can have stretch properties, producibility, and breakage resistance all at still higher levels. The layer A and the layer B have a difference in density from each other at a certain level. The configuration effectively eliminates or minimizes excessive easiness to elongate due to stress and contributes to higher strength of the stretch label. This is probably because the difference in density contributes to effectively higher strength by the action of the interfaces between the layer A and the layer B. Thus, the stretch label according to the present invention can have stretch properties, producibility, and breakage resistance all at still higher levels.

### Method for Producing Stretch Label according to Present Invention

The method for producing a stretch label according to the present invention includes the step of preparing the stretch film in the present invention. The "step of preparing the stretch film in the present invention" is herein also referred to as a "film preparation step". The method for producing a stretch label according to the present invention may further include one or more of any other steps than the film preparation step. A non-limiting example of the other steps is the step of forming a layer other than the stretch film in the present invention.

### Film Preparation Step

In the film preparation step, the stretch film in the present invention may be prepared by any of common techniques melt film forming techniques. Among them, melt film forming techniques are preferred, of which T-die technique is particularly preferred. The lamination technique may be selected from common techniques such as coextrusion techniques (e.g., feedblock technique and multi-manifold technique) and dry lamination technique. Among them, coextrusion techniques are preferred, of which feedblock technique is more preferred. The lamination to form the base layer part is preferably performed using a layer multiplier, and particularly preferably performed using a layer multiplier in combination with one or more feedblocks. The layer multiplier is an apparatus that laminates film layers to form a multilayer assembly. A non-limiting example of the lamination technique of film layers using the layer multiplier is a technique of dividing a film layer in the transverse direction, and stacking the divided film layers in the thickness direction. The "layer multiplier" is herein also simply referred to as a "multiplier". The multiplier is available typically from Nordson Extrusion Dies Industries, LLC.

A specific example of the coextrusion technique (feedblock technique) will be illustrated below. Typically, a material or materials to form the base layer part, and a material or materials to form the surface layers are independently charged into two or more extruders individually set at predetermined temperatures. The materials are then coextruded from T-dies. In this process, multiple layers are stacked to form a base layer part having a predetermined multilayer configuration preferably using the feedblock(s) and the multiplier in combination.

The feeding amounts of the materials may be adjusted as needed using gear pumps. In addition, a filter is advantageously used to remove foreign substances (foreign matter) so as to reduce film breakage. The extrusion temperature may vary depending on the types of the materials to be used, is not limited, but is preferably 150°C to 250°C.

The coextruded polymers are rapidly cooled typically with a cooling drum. This can give a multilayered unoriented film (sheet).

Though not limited, when the stretch film in the present invention is a stretch film including the base layer part according to the preferred embodiment, the film preparation step preferably includes a first substep, a second substep, and a third substep as follows. In the first substep, a material (a), a material (b), and a material (c) are independently melted. The "material (a)" refers to a material to constitute the layer A. The "material (b)" refers to a material to constitute the layer B. The "material (c)" refers to a material to constitute the surface layers. In the second substep, the material (a) and the material (b) each melted in the first substep are stacked on each other (adjacent to each other) to form a multilayer assembly. In the third substep, the material (c) melted in the first substep is stacked on both sides of the multilayer assembly formed in the second substep. The film preparation step may further include one or more other substeps than the first, second, and third substeps. The other substeps may be provided at any position, such as before the first substep, after from the third substep, between the first substep and the second substep, and between the second substep and the third substep.

In the first substep, the material (a), the material (b), and the material (c) are preferably individually melted (or melted and kneaded) using known or common extruders. For example, the material (a), the material (b), and the material (c) may be charged respectively into three extruders set at predetermined temperatures and melted (or melted and kneaded). The extrusion temperatures are not limited, but are preferably 150°C to 250°C.

In the second substep, the material (a) and the material (b), each of which is melted in the first substep, are stacked on each other (adjacent to each other) to form a multilayer assembly. Though not limited, the multilayer assembly may be formed by stacking the molten material (a) and the molten material (b) sequentially, or simultaneously using feedblocks. In another embodiment, the multilayer assembly may be a multilayer assembly that is formed by forming a multilayer assembly by the sequential stacking or by the coextrusion (simultaneous stacking), and further multiplying the formed multilayer assembly using the multiplier. The stacking is preferably, but not limitatively, performed using the feedblock(s) in combination with the multiplier. Each of the feedblocks may be used alone or in combination, and each of the multipliers may be used alone or in combination. The total number of layer(s) derived from the material (a) and layers derived from the material (b) in the multilayer assembly is 3 to 65 and is preferably 5 to 33, and more preferably 9 to 33. The multilayer assembly obtained in the second substep constitutes the base layer part in the stretch film in the present invention.

In a specific embodiment, a multilayer assembly formed by stacking the material (a) and the material (b) on each other (adjacent to each other) in the second substep may be obtained typically by extruding, using one or more feedblocks, the material (a) and the material (b) each melted in the first substep. This gives a multilayer assembly having a configuration of including the material (a), the material (b), and the material (a) disposed in this order. The multilayer assembly having this configuration is also referred to as a "multilayer assembly 1".

In another specific embodiment, a multilayer assembly formed by stacking the material (a) and the material (b) on each other (adjacent to each other) in the second substep may be obtained typically by stacking the multilayer assembly 1 as one unit using the multiplier to give a "multilayer assembly 2". The multilayer assembly 2 has a structure of "material (a)/material (b)/material (a)/material (a)/material (b)/material (a)/.../material (a)/material (b)/material (a)".

In yet another specific embodiment, a multilayer assembly formed by stacking the material (a) and the material (b) on each other (adjacent to each other) in the second substep may be obtained typically by extruding the material (a) and the material (b) using one or more feedblocks to give a "multilayer assembly 3", where the material (a) and the material (b) have been melted in the first substep. The multilayer assembly 3 has a configuration including the material (b), the material (a), and the material (b) disposed in this order.

In still another specific embodiment, a multilayer assembly formed by stacking the material (a) and the material (b) on each other (adjacent to each other) in the second substep may be obtained typically by stacking the multilayer assembly 3 as one unit using the multiplier to give a "multilayer assembly 4". The multilayer assembly 4 has a structure of "material (b)/material (a)/material (b)/material (b)/material (a)/material (b)/.../material (b)/material (a)/material (b)".

In another specific embodiment, a multilayer assembly formed by stacking the material (a) and the material (b) on each other (adjacent to each other) in the second substep may be obtained typically by extruding the material (a) and the material (b) using one or more feedblocks to give a multilayer assembly having a configuration including the material (a) and the material (b) disposed on each other, where the material (a) and the material (b) have been melted in the first substep, and subsequently stacking the multilayer assembly as one unit using the multiplier to give a "multilayer assembly 5". The multilayer assembly 5 has a structure of "material (a)/material (b)/material (a) /material (b)/.../material (a)/material (b)". The multilayer assembly 5 is also a multilayer assembly having a structure of "material (b)/material (a)/material (b)/material (a)/.../material (b)/material (a)" when seen the other way around.

In the third substep, the material (c) melted in the first substep is stacked on both sides of the multilayer assembly (e.g., any of the multilayer assemblies 1 to 5) formed in the second substep. The stacking in the third substep is preferably performed using one or more feedblocks. The stacked material (c) constitutes the surface layers in the stretch film in the present invention. The third substep gives a multilayers structure. The multilayer structure includes the multilayer assembly formed in the second substep, and the material (c) disposed on both sides of the multilayer assembly, where the material (c) has been melted in the first substep.

Though not limited, the multilayer structure formed via the first substep, the second substep, and the third substep may be coextruded from a T-die and rapidly cooled using a cooling drum or any other device to form interfaces between layers. This gives a multilayered unoriented film (sheet) having two or more interfaces each between the layer A and the layer B.

The multilayer assembly 2 having the structure of "material (a)/material (b)/material (a)/material (a)/material (b)/material (a)/.../material (a)/material (b)/material (a)" is supposed to be a base layer part having a structure of "layer A/layer B/layer A/layer A/layer B/layer A/.../layer A/layer B/layer A". In fact, however, the multilayer assembly 2 constitutes a base layer part having a structure of "layer A/layer B/layer A/layer B/.../layer A/layer B/layer A". This is because each portion including layers formed by stacking an identical material in the multilayer assembly 2, i.e., each portion of "layer A/layer A" formed from "material (a)/material (a)", loses the interface and constitutes one layer A. Likewise, the multilayer assembly 4 is supposed to be a base layer part having a structure of "layer B/layer A/layer B/layer B/layer A/layer B/.../layer B/layer A/layer B". In fact, however, the multilayer assembly 4 constitutes a base layer part having a structure of "layer B/layer A/layer B/layer A/.../layer B/layer A/layer B". This is because each portion including layers formed by stacking an identical material in the multilayer assembly 4, namely, each portion of "layer B/layer B" formed from "material (b)/material (b)", loses the interface and constitutes one layer B.

The surface layer and the outermost layer (resin layer) of the base layer part, when being layers formed from materials having an identical resin composition, lose the interface between them and constitute one layer (surface layer).

The other substep(s) is not limited, but may be selected from the substep of drawing and the substep of surface treatment. The substep of drawing (drawing substep) does not have to be performed, but slight drawing may be performed from the viewpoint of producibility. The drawing may be selected typically from biaxial drawing and uniaxial drawing. In the biaxial drawing, drawing is performed both in a machine direction (also referred to as longitudinal direction or MD) and in a transverse direction (a direction perpendicular to the machine direction; also referred to as cross direction or TD). In the uniaxial drawing, drawing is performed in the machine direction or in the transverse direction. In particular, the drawing is preferably performed at least uniaxially in the machine direction (MD). The stretch film, when drawn at least uniaxially in the machine direction (MD), advantageously contributes to better producibility, because the stretch film becomes hard in the MD to resist elongation. When the stretch film is a uniaxially drawn film and is highly elongated in a direction perpendicular to the drawing direction, strain in the drawing direction occurs. Typically when a print layer is provided on the stretch film, the strain may cause the print layer to break in the drawing direction. To eliminate or minimize this, the drawing is more preferably performed biaxially in the MD and in the TD. The drawing technique may be any of roll technique, tenter technique, and tube technique. The drawing, when performed biaxially (in two directions), may be performed simultaneously or subsequently in the two directions. More specifically, the drawing may be permed typically in the following manner. The multilayered unoriented film may be drawn by the roll technique in the machine direction at a drawing temperature of 60°C to 75°C to a draw ratio of 1.05 to 1.30 times, and then drawn by the tenter technique in the transverse direction at a drawing temperature of 60°C to 75°C to a draw ratio of 1.05 to 1.30 times. The drawing, if performed to a draw ratio in the machine direction of greater than 1.30 times, and/or to a draw ratio in the transverse direction of greater than 1.30 times, may cause the stretch label to have lower stretch properties.

As used herein, the term "machine direction" of the stretch film refers to a production line direction of the stretch film. The term "transverse direction" of the stretch film refers to a direction perpendicular to the machine direction.

A non-limiting example of the substep of surface treatment is the substep of subjecting the surface of the stretch film in the present invention to a common surface treatment such as corona discharge treatment, primer treatment, and/or flame treatment.

The film preparation step has been illustrated by taking an example in which the base layer part includes the layers A and the layers B alone. Even when the base layer part further includes one or more other layers than the layers A and the layers B, the base layer part and the multilayered unoriented film may be prepared by a step or steps similar to the above. The film preparation step has been illustrated by taking an example in which three materials are melted. However, the film preparation step is not limited to this, and may for example be a step including a substep (i) and a substep (ii) as follows. In the substep (i), two materials (e.g., the material (a) and the material (b)) are melted. In the substep (ii), the two materials ((e.g., the material (a) and the material (b)) melted in the substep (i) are stacked on each other (adjacent to each other) to form a multilayer assembly. This step does not include the third substep (substep (iii)), and the outermost layers of the multilayer assembly obtained in the substep (ii) serve as the surface layers.

### Other steps

Though not limited, the method for producing a stretch label according to the present invention may further include one or more of the other steps than the film preparation step, such as the step of providing a print layer and the step of providing a protective layer.

In the step of providing a print layer, one or more printing substeps are performed to form a print layer. In each of the printing substeps, a printing ink is applied onto at least one surface of the stretch film in the present invention, and the applied ink is solidified typically by drying. For example, in an embodiment, one or more printing substeps are performed to form a designed print layer, and then one or more printing substeps are performed to form a background print layer. The step of providing a print layer may be performed by any of known or common printing techniques. Among them, gravure printing technique and/or flexographic printing technique is preferred.

The printing ink may be prepared typically by mixing the binder resin, the coloring pigment, a solvent, additives, and any other components as needed. The mixing may be performed by any of known or common mixing procedures without limitation. The mixing may be performed using any of mixing devices including mixers such as paint shakers, butterfly mixers, planetary mixers, pony mixers, dissolvers, tank mixers, homomixers, and homodispers; mills such as roll mills, sand mills, ball mills, bead mills, and line mills; and kneaders. The mixing time (residence time) in the mixing is not limited, but is preferably 10 to 120 minutes. The resulting printing ink may be filtered as needed before use. The components (the binder resin, the coloring pigment, the solvent, and the other additives) may each be used alone or in combination.

The solvent (solvent medium) may be selected typically from organic solvents for use generally in printing inks. Non-limiting examples of the solvent include esters including acetic esters such as ethyl acetate, propyl acetate, and butyl acetate; alcohols such as methanol, ethanol, isopropyl alcohol, propanol, and butanol; ketones such as methyl ethyl ketone and methyl isobutyl ketone; aromatic hydrocarbons such as toluene and xylenes; aliphatic hydrocarbons such as hexane and octane; alicyclic hydrocarbons such as cyclohexane and methylcyclohexane; glycols such as ethylene glycol and propylene glycol; glycol ethers such as ethylene glycol monopropyl ether, propylene glycol monomethyl ether, and propylene glycol monobutyl ether; and glycol ether esters such as propylene glycol monomethyl ether acetate. The solvent can be removed by drying, after the printing ink is applied to the stretch film in the present invention. As used herein, the term "solvent" (solvent medium) also refers to and includes a "dispersion medium".

When the step of providing a protective layer is performed to provide a protective coating layer as the protective layer, the protective coating layer may be formed typically by performing a printing substep. In this printing substep, a coating composition to form the protective coating layer is applied onto at least one surface of the stretch film in the present invention, and the applied agent is solidified typically by drying. The step of providing the protective coating layer may be performed by any of known or common coating techniques. Among them, gravure printing technique and/or flexographic printing technique is preferred.

Though not limited, the print layer and the protective layer may be provided using in a printing machine in one line in the step of providing a print layer and the step of providing a protective layer. For example, a stretch label having a configuration of a print layer, a stretch film in the present invention, and a protective layer disposed in this order may be produced by providing the print layer on one surface of the stretch film in the present invention, subsequently turning the stretch film in the present invention upside down, and providing the protective layer on the other surface of the stretch film in the present invention. Alternatively, the stretch label may be produced by providing the protective layer on one surface of the stretch film in the present invention, subsequently turning the stretch film in the present invention upside down, and providing the print layer on the other surface of the stretch film in the present invention.

The "machine direction (MD)" of the stretch label according to the present invention is identical to the machine direction (MD) of the stretch film in the present invention. The "transverse direction (TD)" of the stretch label refers to a direction perpendicular to the machine direction and is identical to the transverse direction (TD) of the stretch film in the present invention. The stretch label according to the present invention is preferably extended in the machine direction or in the transverse direction upon attachment to an objective article such as a container. The stretch label is preferably produced so that the one direction in which the stretch label offers stretch properties is the machine direction or the transverse direction.

### Stretch Sleeve Label Production Method

The method for producing a stretch sleeve label according to the present invention is not limited, but is exemplified by a method as follows. In the method, a print layer and/or a protective layer is provided on a continuous stretch film in the present invention having stretch properties in the transverse direction (TD). The resulting article is slit to a predetermined width to give a continuous label. The continuous label includes two or more stretch labels according to the present invention each having stretch properties in the transverse direction (TD), where the two or more stretch labels lie in a line in the longitudinal direction (machine direction). The inner side surfaces, or outer side surfaces, of both ends of the continuous label are overlaid on each other to allow the continuous label to be in sleeve form so that the transverse direction of the continuous label (namely, the transverse direction of the stretch film in the present invention) be a circumferential direction of the sleeve; and the both ends are bonded with each other by sealing the overlapped portion in a strip with a width of about 0.2 to 10 mm. Alternatively, one end of the continuous label is overlaid on the other end so that the transverse direction be a circumferential direction and the one end face outward; and the both ends are bonded by sealing the overlapped portion in a strip with a width of about 0.2 to 10 mm. As a result, a continuous label (continuous stretch sleeve label) having a continuous cylindrical shape is obtained. The continuous stretch sleeve label is cut in the transverse direction so that the resulting article has a predetermined length in the machine direction. This yields one stretch sleeve label (the stretch sleeve label according to the present invention) having a predetermined length in the height direction. When the stretch sleeve label is provided with perforations to cut off the label, the perforations may be provided by a common procedure. For example, the perforations may be formed typically by pressing a disk-like blade peripherally having cutting ends and non-cutting portions in alternate order, or by using laser beams. The step of providing perforations may be performed at any temporal position selected as appropriate. For example, the step of providing perforations may be performed after the step of providing a print layer, or before or after the step of processing the label into a sleeve label.

### Labeled Container

The stretch label according to the present invention may be typically, but not limitatively, applied to a container such as a beverage container and may be used as a labeled container as illustrated in Fig. 6. The stretch label according to the present invention may also be applied to an objective article other than the container. For example, the stretch label according to the present invention (in particular, the stretch sleeve label according to the present invention), when attached to a container, gives a labeled container (labeled container including the stretch label according to the present invention). Non-limiting examples of the container include soft drink bottles such as PET bottles; home-delivered milk bottles; containers for foodstuffs such as seasonings; alcoholic drink bottles; containers for pharmaceutical preparations; containers for chemicals such as detergents and aerosols (sprays); containers for toiletry products; and containers for bowl noodle soups. The shape of the container is not limited, but is exemplified by cylindrical or rectangular bottle shapes; cup or bowl shapes; and any other various shapes. The material to constitute the container is not limited, but may be selected typically from plastics such as PETs; glass; and metals.

In the labeled container, the shape of the container and the region to which the stretch label according to the present invention is attached are not limited. For example, the stretch label according to the present invention, as having high fittability (conformability), can be attached to a container having a large-diameter portion and a small-diameter portion, where the small-diameter portion has a smaller circumference as compared with the large-diameter portion. Specifically, the stretch label can be attached to the container in a region ranging from the large-diameter portion to the small-diameter portion, where the region has a difference in diameter. In particular, the stretch label according to the present invention is especially useful for a pressure-tight PET bottle or another PET bottle having a shape as illustrated in Fig. 6. The PET bottle having the shape includes a petaloid base, a body portion, a shoulder portion, and a spout portion. The body portion is cylindrical and is disposed above, and connected to, the base. The shoulder portion is disposed above, and connected to, the body portion and has a diameter that is reduced upward. The spout portion is disposed above, and connected to, the shoulder portion. A cap can be attached to the spout portion. The stretch label according to the present invention can be attached to the above-mentioned container in a region ranging from the body portion (large-diameter portion) to the shoulder portion (small-diameter portion having a smaller diameter as compared with the body portion).

The labeled container may be prepared typically in the following manner. There is used a stretch sleeve label according to the present invention having a diameter equal to or less than the minimum diameter of a portion of a container, where the container is an objective article to which the label is attached. The stretch sleeve label is extended in the circumferential direction by an external force so as to have a larger diameter as compared with the objective article container and is fitted onto the container. The external force is then released, and this allows the stretch sleeve label to spontaneously contract. Thus, the stretch sleeve label conforms to, and comes into intimate contact with, the container. This gives the labeled container. The stretch label according to the present invention offers excellent resilience even when it is highly extended. The stretch label can therefore offer high fittability (conformability) even when the objective article container has a difference in diameter (includes, in the body portion, portions having different diameters). Examples

The present invention will be illustrated in further detail with reference to several examples below. It should be noted, however, that the examples are by no means intended to limit the scope of the present invention.

Table 1 presents items such as compositions of surface layer materials, base layer part materials (layer E1 materials and layer E2 materials) used in the examples and the comparative examples; and configurations and evaluation results of stretch films and stretch labels prepared in the examples and the comparative examples.

Table 2 presents details of the materials used in the examples and the comparative examples.

### Example 1

### Materials

The materials to constitute a base layer part were as follows. A material used as a layer E1 material to constitute a first layer E (layer E1) included 20% by weight of a polyethylene resin A (trade name UMERIT 3540F, supplied by UBE-MARUZEN POLYETHYLENE CO., LTD.) and 80% by weight of a polyethylene resin C (trade name UMERIT 715FT, supplied by UBE-MARUZEN POLYETHYLENE CO., LTD.).

A material used as a layer E2 material to constitute a second layer E (layer E2) included 100% by weight of the polyethylene resin A.

A material used as a surface layer material to constitute surface layers included 99% by weight of the polyethylene resin A and 1% by weight of synthetic zeolite.

### Stretch Film

The layer E2 material, the layer E1 material, and the surface layer material were charged respectively into an extruder "x" heated at 230°C, an extruder "y" heated at 230°C, and an extruder "z" heated at 230°C. The materials were melted and extruded using the three extruders. The molten layer E1 material and the molten layer E2 material were divided, merged, and stacked using a lamination apparatus. The lamination apparatus included feedblocks for merging to form two-component three layers, in combination with a four-manifold multiplier (supplied by Nordson Extrusion Dies Industries, LLC.). In the process, a two-component three-layer configuration of the layer E2 material, the layer E1 material, and the layer E2 material disposed in this order (E2/E1/E2) acted as one constitutional repeating unit. The process gave a multilayer assembly (I). The multilayer assembly (I) included four constitutional repeating units each having the two-component three-layer configuration and being stacked on each other (in a repeating number of 4). The molten surface layer material was merged with and stacked on both sides of the multilayer assembly (I) using feedblocks and yielded a multilayer assembly (II). Further, the multilayer assembly (II) was extruded from a T-die, rapidly cooled on a casting drum cooled at 25°C, and yielded a multilayered unoriented film including 11 layers. The multilayered unoriented film included a base layer part, and surface layers disposed on both sides of the base layer part and had a configuration of "surface layer/layer E2/layer E1/layer E2/layer E1/layer E2/layer E1/layer E2/layer E1/layer E2/surface layer". The base layer part in the multilayered unoriented film was formed by stacking the constitutional repeating units each having the two-component three-layer configuration in a repeating number of 4 and was supposed to include 12 layers. In fact, however, two adjacent layers of the layer E2 material were combined to form one layer. Thus, the resulting base layer part had a 9-layer configuration of "layer E2/layer E1/layer E2/layer E1/layer E2/layer E1/layer E2/layer E1/layer E2". In the interest of density, the layer E1 is a layer A, and the layer E2 is a layer B, in the base layer part.

Next, the multilayered unoriented film was subjected to tenter drawing at 75°C in the transverse direction (TD) and in the machine direction (MD) respectively to a draw ratio of 1.11 times and to a draw ratio of 1.02 times. This gave a stretch film as an oriented film.

### Stretch Sleeve Label

While the above-prepared stretch film was transported in the machine direction, a designed print layer was formed on one side of the stretch film using a process-color printing ink, and a background print layer was then formed on the one side excluding a portion to be a seam using a white printing ink. The printing was performed using a gravure printing machine. Thus, a print layer having a thickness of about 3 µm was formed, and a continuous stretch label was obtained.

Next, the continuous stretch label was shaped into a sleeve, and one end in the transverse direction of the stretch label was laid on the other end so that the transverse direction be a circumferential direction. One surface in the one end was heat-sealed with the other surface in the other end to form a 2-mm wide seam. This gave a cylindrical continuous stretch label (continuous stretch sleeve label). Further, the continuous stretch sleeve label (continuous label) was cut to an individual label size and yielded stretch sleeve labels. The stretch sleeve labels had a sleeve height of 165 mm and a sleeve circumference of 152 mm.

### Labeled Container

Next, the stretch sleeve label was opened into a sleeve, and while being extended in diameter to an elongation of 50% (to a stretch ratio of 1.5 times), the stretch sleeve label was fit onto and attached to a container and yielded a labeled container, in which the stretch label was attached to the container in a region ranging from the shoulder portion to the body portion. The container was a petaloid-base shell-type PET bottle for carbonated beverages and had a capacity of 500 ml and a body circumference of 215 mm.

### Example 2

A stretch film, a stretch sleeve label, and a labeled container were prepared by the procedure of Example 1, except for using, as the layer E1 material, 100% by weight of a polyethylene resin E (trade name UMERIT 0540F, supplied by UBE-MARUZEN POLYETHYLENE CO., LTD.).

### Example 3

### Materials

Materials to constitute a base layer part were as follows. A material used as a layer E1 material included 100% by weight of a polyethylene resin D (trade name UMERIT 1540F, supplied by UBE-MARUZEN POLYETHYLENE CO., LTD.).

A material used as a layer E2 material included 100% by weight of a polyethylene resin B (trade name UMERIT 2540F, supplied by UBE-MARUZEN POLYETHYLENE CO., LTD.).

A material used as a surface layer material included 100% by weight of the polyethylene resin B.

### Stretch Film

The layer E2 material, the layer E1 material, and the surface layer material were charged respectively into an extruder "x" heated at 230°C, an extruder "y" heated at 230°C, and an extruder "z" heated at 230°C. The materials were melted and extruded using the three extruders. The molten layer E1 material and the molten layer E2 material were divided, merged, and stacked using a lamination apparatus. The lamination apparatus included feedblocks for merging to form two-component three layers, in combination with an eight-manifold multiplier (supplied by Nordson Extrusion Dies Industries, LLC.). In the process, a two-component three-layer configuration including the layer E2 material, the layer E1 material, and the layer E2 material disposed in this order (E2/E1/E2) acted as one constitutional repeating unit. The process gave a multilayer assembly (III). The multilayer assembly (III) included eight constitutional repeating units each having the two-component three-layer configuration and being stacked on each other (in a repeating number of 8). The molten surface layer material was merged with and stacked on both sides of the multilayer assembly (III) using feedblocks and yielded a multilayer assembly (IV). Further, the multilayer assembly (IV) was extruded from a T-die, rapidly cooled on a casting drum cooled at 25°C, and yielded a stretch film as a multilayered unoriented film including 17 layers. The multilayered unoriented film included a base layer part, and surface layers disposed on both side of the base layer part, and had a configuration of "surface layer/layer E1/layer E2/layer E1/layer E2/layer E1/layer E2/layer E1/layer E2/layer E1/layer E2/layer E1/layer E2/layer E1/layer E2/layer E1/surface layer". The base layer part in the stretch film was formed by staking the constitutional repeating units each having the two-component three-layer configuration in a repeating number of 8 and was supposed to include 24 layers. In fact, however, two adjacent layers of the layer E2 material were combined to form one layer. Further, the surface layer material had an identical composition to the layer E2 material which constitutes the outermost layer of the base layer part, and the surface layer and the outermost layer of the base layer part were combined to form one layer. Thus, the base layer part had a 15-layer configuration of "layer E1/layer E2/layer E1/layer E2/layer E1/layer E2/layer E1/layer E2/layer E1/layer E2/layer E1/layer E2/layer E1/layer E2/layer E1". In the interest of density, the layers E1 are layers A, and the layers E2 are layers B, in the base layer part.

### Stretch Sleeve Label and Labeled Container

A stretch sleeve label and a labeled container were prepared by the procedure of Example 1, except for using the above-prepared stretch film.

### Comparative Example 1

### Materials

A material used as a layer E1 material to constitute a base layer part included 100% by weight of the polyethylene resin E (trade name UMERIT 0540F, supplied by UBE-MARUZEN POLYETHYLENE CO., LTD.).

A material used as a surface layer material included 99% by weight of the polyethylene resin A and 1% by weight of synthetic zeolite.

### Stretch Film

The layer E1 material and the surface layer material were charged respectively into an extruder "y" heated at 230°C and an extruder "z" heated at 230°C. The materials were melted and extruded using the two extruders. The molten layer E1 material and the molten surface layer material were processed using feedblocks for merging to form two-component three layers, and yielded a multilayer assembly (V). The multilayer assembly (V) had a two-component three-layer configuration including the surface layer material, the layer E1 material, and the surface layer material disposed in this order. Further, the multilayer assembly (V) was extruded from a T-die, rapidly cooled on a casting drum cooled at 25°C, and yielded a multilayered unoriented film. The multilayered unoriented film included three layers and had a configuration of the surface layer, the layer E1, and the surface layer disposed in this order, where the base layer part was a single layer of the layer E1.

Next, the multilayered unoriented film was subjected to tenter drawing at 75°C in the transverse direction (TD) and in the machine direction (MD) respectively to a draw ratio of 1.11 times and to a draw ratio of 1.02 times. This gave a stretch film as an oriented film.

### Stretch Sleeve Label and Labeled Container

A stretch sleeve label and a labeled container were prepared by the procedure of Example 1, except for using the above-prepared stretch film.

### Comparative Example 2

### Materials

A material used as a layer E1 material to constitute a base layer part included 100% by weight of a polyethylene resin F (trade name UMERIT 4540F, supplied by UBE-MARUZEN POLYETHYLENE CO., LTD.).

A material used as a surface layer material included 99% by weight of the polyethylene resin F and 1% by weight of synthetic zeolite.

### Stretch Film

The layer E1 material and the surface layer material were charged respectively into an extruder "y" heated at 230°C and an extruder "z" heated at 230°C. The materials were melted and extruded using the two extruders. The molten layer E1 material and the molten surface layer material were stacked using feedblocks for merging to form two-component three layers and yielded a multilayer assembly (VI). The multilayer assembly (VI) had a two-component three-layer configuration including the surface layer material, the layer E1 material, and the surface layer material disposed in this order. Further, the multilayer assembly (VI) was extruded from a T-die, rapidly cooled on a casting drum cooled at 25°C, and yielded a stretch film. The stretch film was a multilayered unoriented film including three layers and had a configuration including the surface layer, the layer E1, and the surface layer disposed in this order. In the stretch film, the base layer part was a single layer of the layer E1.

### Stretch Sleeve Label and Labeled Container

A stretch sleeve label and a labeled container were prepared by the procedure of Example 1, except for using the above-prepared stretch film.

### Comparative Example 3

A stretch film, a stretch sleeve label, and a labeled container were prepared by the procedure of Example 1, except for using: 100% by weight of the polyethylene resin C as a layer E1 material; 100% by weight of the polyethylene resin C as a layer E2 material; and 99% by weight of the polyethylene resin F and 1% by weight of synthetic zeolite as a surface layer material. The layer E1 material and the layer E2 material had a composition identical to each other. Thus, each interface between the layer E1 and the layer E2 in the base layer part in the stretch film disappeared, and all the layers E1 and the layers E2 were combined to form one layer, and the resulting base layer part had a single-layer configuration.

### Evaluations

The stretch films, the continuous stretch labels, and the labeled containers prepared in the examples and the comparative examples were evaluated as follows. Evaluation results are presented in Table 1.

### (1) F10 Value

Each of the continuous stretch labels prepared in the examples and the comparative examples was cut to give a rectangular label piece as a measurement sample. The label piece had a size of 200 mm in the transverse direction (TD) and 15 mm in the machine direction (MD). Gauge marks were drawn on the measurement sample at positions 50 mm inside from of the both ends (both ends in the transverse direction) of the measurement sample, to give a gauge length of 100 mm.

The resulting measurement sample was subjected to a test using a tensile tester (Shimadzu Autograph (AGS-50G, with a 500-N load cell), supplied by Shimadzu Corporation) under temperature and humidity conditions at a temperature of 23°C ±2°C and relative humidity of 50% ±5% (% RH).

The measurement sample was mounted to the tensile tester set at a chuck-to-chuck distance of 100 mm so that a position between the gauge marks be a measurement position (at an initial length of 100 mm). The measurement sample was pulled to a chuck-to-chuck distance of 110 mm (to an elongation of 10%) at a tensile speed (testing speed) of 50 mm/min. using the tensile tester. Next, the chucks were returned from the position at a chuck-to-chuck distance of 110 mm to the test starting position (to a chuck-to-chuck distance of 100 mm) at a moving speed of 50 mm/min. Elongation and tensile stress were measured using the tensile tester, and a tensile stress of the measurement sample at the point when the elongation (strain) became 10% upon pulling was defined as an "F10 value".

The test was performed in a number (n) of 5 (n = 5), and the average of the five measurements was defined as an evaluation result.

### (2) F60 value

Each of the continuous stretch labels prepared in the examples and the comparative examples was cut to give a rectangular label piece as a measurement sample. The label piece had a size of 200 mm in the transverse direction (TD) and 15 mm in the machine direction (MD). Gauge marks were drawn on the measurement sample at positions 50 mm inside from of the both ends (both ends in the transverse direction) of the measurement sample, to give a gauge length of 100 mm.

The resulting measurement sample was subjected to a test using a tensile tester (Shimadzu Autograph (AGS-50G, with a 500-N load cell), supplied by Shimadzu Corporation) under temperature and humidity conditions at a temperature of 23°C ±2°C and relative humidity of 50% ±5% (% RH).

The measurement sample was mounted to the tensile tester set at a chuck-to-chuck distance of 100 mm so that a position between the gauge marks be a measurement position (at an initial length of 100 mm). The measurement sample was pulled to a chuck-to-chuck distance of 160 mm (to an elongation of 60%) at a tensile speed (testing speed) of 50 mm/min. using the tensile tester. Next, the chucks were returned from the position at a chuck-to-chuck distance of 160 mm to the test starting position (to a chuck-to-chuck distance of 100 mm) at a moving speed of 50 mm/min. Elongation and tensile stress were measured using the tensile tester, and a tensile stress of the measurement sample at the point when the elongation (strain) became 60% was defined as an "F60 value".

The test was performed in a number (n) of 5 (n = 5), and the average of the five measurements was defined as an evaluation result.

### (3) Residual Strain

Each of the continuous stretch labels prepared in the examples and the comparative examples was cut to give a rectangular label piece. The label piece had a size of 200 mm in the transverse direction (TD) and 15 mm in the machine direction (MD) and was used as a measurement sample. Gauge marks were drawn on the measurement sample at positions 50 mm inside from of the both ends (both ends in the transverse direction) of the measurement sample, to give a gauge length of 100 mm.

The resulting measurement sample was subjected to a test using a tensile tester (Shimadzu Autograph (AGS-50G, with a 500-N load cell), supplied by Shimadzu Corporation) under temperature and humidity conditions at a temperature of 23°C ±2°C and relative humidity of 50% ±5% (% RH).

The measurement sample was mounted to the tensile tester set at a chuck-to-chuck distance of 100 mm so that a position between the gauge marks be a measurement position (at an initial length of 100 mm). The measurement sample was pulled to a chuck-to-chuck distance of 160 mm (to an elongation of 60%) at a tensile speed (testing speed) of 50 mm/min. using the tensile tester. Next, the chucks were returned from the position at a chuck-to-chuck distance of 160 mm to the test starting position (to a chuck-to-chuck distance of 100 mm) at a moving speed of 50 mm/min. Elongation and tensile stress were measured using the tensile tester, and an elongation at a point when the tensile stress returned to zero after pulling to an elongation of 60% was defined as a "residual strain". The test was performed in a number (n) of 5 (n - 5), and the average of the five measurements was defined as an evaluation result.

### (4) Printability (Producibility)

Printability upon gravure printing during the production of stretch labels in the examples and the comparative examples was determined according to criterial as follows:
Good: printing was performed without any problem; and
Poor: the stretch film was too soft to provide registration for design printing, and this impeded printing itself.

### (5) Resistance (Breakage Resistance) upon Case Dropping

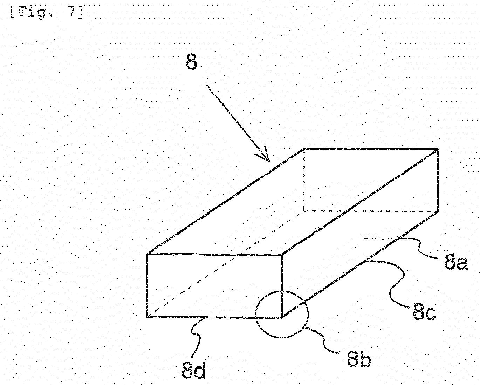

Each of the labeled containers prepared in the examples and the comparative examples was placed in a total number of twenty-four (24) in a rectangular case 8 as illustrated in Fig. 7. The 24 labeled containers were arranged in a four-by-six array in the case 8. The case 8 had a capacity for containing 24 bottles and had a size of 410 mm in long side, 275 mm in short side, and 220 mm in height. The resulting case was dropped off from a height of 600 mm to a concrete ground. In the dropping, the case was positioned so that a plane 8a (bottom of the case illustrated in Fig. 7), a corner 8b, an edge 8c (long side), and an edge 8d (short side) sequentially in this order faced downward in the vertical direction, and the case at each position was subjected to each one dropping. Then, resistance upon case dropping (case drop resistance) was evaluated according to criteria as follows:
Good: one or no labeled container, out of the 24 labeled containers, suffered from label breakage;
Fair: two labeled containers, out of the 24 labeled containers, suffered from label breakage; and
Poor: three or more labeled containers, out of the 24 labeled containers, suffered from label breakage.

### (6) Fittability/Conformability (Stretch Properties)

Fittability/conformability was determined as an evaluation for stretch properties in the labeled containers prepared in the examples and the comparative examples. The fittability/conformability was determined according to criteria as follows:
Good: the stretch label conformed to the container without slack in the shoulder portion; and
Poor: the stretch label did not conform to the container, or suffered from slack in the shoulder portion.

### [Table 1]

**TABLE 1**

| | | | Example 1 | Example 2 | Example 3 | Comparative Example 1 | Comparative Example 2 | Comparative Example 3 |
|---|---|---|---|---|---|---|---|---|
| Material | | Trade name | | | | | | |
| Content (% by weight) in surface layer material (surface layer) | Polyethylene resin A | UMERIT 3540F | 99 | 99 | | 99 | | |
| | Polyethylene resin 8 | UMERIT 2540F | | | 100 | | | |
| | Polyethylene resin F | UMERIT 4540F | | | | | 99 | 99 |
| | Synthetic zeolite | | 1 | 1 | | 1 | 1 | 1 |
| Content (% by weight) in layer E1 material (layer E1) | Polyethylene resin A | UMERIT 3540F | 20 | | | | | |
| | Polyethylene resin C | UMERIT 715FT | 80 | | | | | 100 |
| | Polyethylene resin D | UMERIT 1540F | | | 100 | | | |
| | Polyethylene resin E | UMERIT 0540F | | 100 | | 100 | | |
| | Polyethylene resin F | UMERIT 4540F | | | | | 100 | |
| Content (% by weight) in layer E2 material (layer E2) | Polyethylene resin A | UMERIT 3540F | 100 | 100 | | | | |
| | Polyethylene resin B | UMERIT 2540F | | | 100 | | | |
| | Polyethylene resin C | UMERIT 715FT | | | | | | 100 |
| Layer thickness (µm) per layer | Surface layers | | 5 | 5 | 7.03 | 5 | 3.75 | 5 |
| | Layers E1 | | 5 | 5 | 3.13 | 25 | 22.5 | 5 |
| | Layers E2*1 | | 1.26 | 1.26 | 1.56 | - | - | 1.26 |
| Total number of layers in stretch film | | | 11 | 11 | 17 | 3 | 3 | 3 |
| Ratio of the total thickness of the layers E1 to the total thickness of the layers E2 to the total thickness of the surface layers | | | 4:1:2 | 4:1:2 | 2.3:1:1.3 | 5:0:1 | 3:0:1 | 4:1:2 |
| Stretch film total thickness (µm) | | | 35 | 35 | 50 | 35 | 30 | 35 |
| Surface layer density (g/cm³) | | | 0.930 | 0.930 | 0.923 | 0.930 | 0.942 | 0.942 |
| Layer E1 density (g/cm³) | | | 0.917 | 0.904 | 0.913 | 0.904 | 0.944 | 0.913 |
| Layer E2 density (g/cm³) | | | 0.931 | 0.931 | 0.925 | - | - | 0.913 |
| Stretch film density (g/cm³) | | | 0.923 | 0.915 | 0.918 | 0.911 | 0.944 | 0.921 |
| Stretch label F10 value (MPa) | | | 6.0 | 5.2 | 5.7 | 5.1 | 11.9 | 52 |
| Stretch label F60 value (MPa) | | | 8.1 | 7.0 | 8.2 | 6.7 | 11.9 | 6 9 |
| Stretch label residual strain (%) | | | 12.2 | 11.7 | 11.7 | 11.9 | 47 | 10.8 |
| Prinlability | | | Good | Good | Good | Poor | Good | Poor |
| Resistance upon case dropping | | | Good | Fair | Good | Fair | Good | Fair |
| Fittability/conformability | | | Good | Good | Good | Good | Poor | Good |

| | | | | | | | | |
|---|---|---|---|---|---|---|---|---|
| *1 In Examples 1 and 2 end Comparative Example 3, the values for the layer E2 thickness given in the table each indicate the individual thickness of the layers E2, excluding layers E2 constituting the outermost layers of the base layer part. Each of the layers E2 constituting the outermost layers of the base layer part had a thickness one half the layer E2 thickness given in the table. | | | | | | | | |

### [Table 2]

**Table 2**

| Material | Trade name | Manufacturer | Resin density (g/cm³) | Component |
|---|---|---|---|---|
| Polyethylene resin A | UMERIT 3540F | UBE-MARUZEN POLYETHYLENE CO., LTD. | 0.931 | m-LLDPE |
| Polyethylene resin B | UMERIT 2540F | UBE-MARUZEN POLYETHYLENE CO., LTD. | 0.923 | m-LLDPE |
| Polyethylene resin C | UMERIT 715FT | UBE-MARUZEN POLYETHYLENE CO., LTD. | 0.913 | m-LLDPE |
| Polyethylene resin D | UMERIT 1540F | UBE-MARUZEN POLYETHYLENE CO., LTD. | 0.913 | m-LLDPE |
| Polyethylene resin E | UMERIT 0540F | UBE-MARUZEN POLYETHYLENE CO., LTD. | 0.904 | m-LLDPE |
| Polyethylene resin F | UMERIT 4540F | UBE-MARUZEN POLYETHYLENE CO., LTD. | 0.944 | m-LLDPE |

As is understood from Table 1, the stretch labels according to the present invention (the examples) had excellent stretch properties and still offered producibility and breakage resistance at excellent levels.

In contrast, the samples each including a single layer of the layer E in the base layer part (Comparative Examples 1 and 2) excelled in one or two of producibility, breakage resistance, and stretch properties, but failed to have producibility, breakage resistance, and stretch properties all at satisfactory levels. The sample including adjacent layers E having an identical density in the base layer part and thereby including the base layer part as a single layer (Comparative Example 3) had excellent stretch properties, but offered inferior producibility.

### Reference Signs List

1 stretch film in the present invention
11 surface layer
12 base layer part
12a layer A
12b layer B
12c layer E
2 print layer
3 protective coating layer
4 stretch label according to the present invention
5 stretch sleeve label according to the present invention
51 seam
D circumferential direction
61 background print layer
62 designed print layer
63 solvent, adhesive, or heat-sealed seam
64 protective coating layer
7 labeled container
71 container
8 case

## Claims

1. A stretch label comprising
a stretch film,
the stretch film including:
a base layer part; and
surface layers disposed on or over both sides of the base layer part,
the base layer part including
3 to 65 layers E, the layers E each independently containing a polyethylene resin in a content in the layer of 60% by weight or more and having a density of 0.850 to 0.945 g/cm³,
each of the layers E in the base layer part differing in density from another adjacent layer E.

2. The stretch label according to claim 1,
wherein the layers E in the base layer part include:
at least one layer A containing a polyethylene resin in a content in the layer of 60% by weight or more and having a density of 0.850 to 0.930 g/cm³; and
at least one layer B containing a polyethylene resin in a content in the layer of 60% by weight or more and having a density of 0.945 g/cm³ or less, the density of the layer B being higher than the density of the layer A by 0.005 g/cm³ or more, and
wherein the base layer part has two or more interfaces each between an adjacent pair of the layer A and the layer B.

3. The stretch label according to claim 2,
wherein the layers E in the base layer part include the layer A and the layer B disposed in alternate order in a total number of 3 to 65.

4. The stretch label according to claim 2 or 3,
wherein the ratio of the thickness of the layer(s) A to the thickness of the layer(s) B is from 1:10 to 10:1.

5. The stretch label according to any one of claims 1 to 4,
wherein the surface layers are layers each containing a polyethylene resin in a content in the layer of 60% by weight or more and having a density of 0.900 to 0.945 g/cm³.

6. The stretch label according to claim 5,
wherein the polyethylene resin in the surface layers is metallocene-catalyzed LLDPEs.

7. The stretch label according to any one of claims 1 to 6,
wherein the polyethylene resin in the layers E are metallocene-catalyzed LLDPEs.

8. The stretch label according to any one of claims 1 to 7,
wherein the base layer part includes 5 to 65 layers E.

9. The stretch label according to any one of claims 1 to 8,
wherein the base layer part has a density of 0.890 to 0.940 g/cm³.

10. The stretch label according to any one of claims 1 to 9,
wherein the stretch film contains polyethylene resin in a content of 70% by weight or more.

11. The stretch label according to any one of claims 1 to 10,
wherein the ratio of the thickness of the surface layers to the thickness of the base layer part is from 1:10 to 1:1.5.

12. The stretch label according to any one of claims 1 to 11,
wherein the stretch label has a residual strain after 60% extension of 15% or less.

13. The stretch label according to any one of claims 1 to 12,
wherein the polyethylene resin in the layers E contains ethylene-α-olefin copolymers, and the content of the constitutional unit derived from α-olefin based on the total amount of the ethylene-α-olefin copolymer is from greater than 0% by weight to 50% by weight.

14. The stretch label according to any one of claims 1 to 13,
wherein the layers E each has a thickness of 0.5 µm or more.

15. A method for producing a stretch label to produce the stretch label according to any one of claims 2 to 14, the method comprising
a step for preparing the stretch film,
the step for preparing the stretch film including the substeps of:
(i) independently melting a material (a) to form the layer A, a material (b) to form the layer B, and a material (c) to form the surface layers;
(ii) stacking the material (a) and the material (b) each melted in the first substep on each other to form a multilayer assembly; and
(iii) stacking the material (c) melted in the first substep on both sides of the multilayer assembly formed in the second substep.

## Patentansprüche

1. Dehnetikett umfassend
eine Dehnfolie,
wobei die Dehnfolie einschließt:
einen Basisschichtteil; und
Oberflächenschichten, die auf oder über beiden Seiten des Basisschichtteils angeordnet sind,
wobei der Basisschichtteil einschließt
3 bis 65 Schichten E, wobei die Schichten E jeweils unabhängig ein Polyethylenharz in einem Gehalt in der Schicht von 60 Gew.-% oder mehr enthalten und eine Dichte von 0,850 bis 0,945 g/cm³ aufweisen,
wobei jede von den Schichten E in dem Basisschichtteil sich hinsichtlich der Dichte von einer anderen angrenzenden Schicht E unterscheidet.

2. Dehnetikett gemäß Anspruch 1,
wobei die Schichten E in dem Basisschichtteil einschließen:
wenigstens eine Schicht A, die ein Polyethylenharz in einem Gehalt in der Schicht von 60 Gew.-% oder mehr enthält und eine Dichte von 0,850 bis 0,930 g/cm³ aufweist; und
wenigstens eine Schicht B, die ein Polyethylenharz in einem Gehalt in der Schicht von 60 Gew.-% oder mehr enthält und eine Dichte von 0,945 g/cm³ oder weniger aufweist, wobei die Dichte der Schicht B um 0,005 g/cm³ oder mehr höher ist als die Dichte der Schicht A, und
wobei der Basisschichtteil zwei oder mehr Grenzflächen jeweils zwischen einem angrenzenden Paar der Schicht A und der Schicht B aufweist.

3. Dehnetikett gemäß Anspruch 2,
wobei die Schichten E in dem Basisschichtteil die Schicht A und die Schicht B in abwechselnder Reihenfolge angeordnet in einer Gesamtzahl von 3 bis 65 einschließen.

4. Dehnetikett gemäß Anspruch 2 oder 3,
wobei das Verhältnis der Dicke der Schicht(en) A zu der Dicke der Schicht(en) B 1:10 bis 10:1 beträgt.

5. Dehnetikett gemäß einem der Ansprüche 1 bis 4,
wobei die Oberflächenschichten Schichten sind, die jeweils ein Polyethylenharz in einem Gehalt in der Schicht von 60 Gew.-% oder mehr enthalten und eine Dichte von 0,900 bis 0,945 g/cm³ aufweisen.

6. Dehnetikett gemäß Anspruch 5, wobei es sich bei dem Polyethylenharz in den Oberflächenschichten um Metallocen-katalysierte LLDPEs handelt.

7. Dehnetikett gemäß einem der Ansprüche 1 bis 6, wobei es sich bei dem Polyethylenharz in den Schichten E um Metallocen-katalysierte LLDPEs handelt.

8. Dehnetikett gemäß einem der Ansprüche 1 bis 7, wobei der Basisschichtteil 5 bis 65 Schichten E einschließt.

9. Dehnetikett gemäß einem der Ansprüche 1 bis 8, wobei der Basisschichtteil eine Dichte von 0,890 bis 0,940 g/cm³ aufweist.

10. Dehnetikett gemäß einem der Ansprüche 1 bis 9, wobei die Dehnfolie Polyethylenharz in einem Gehalt von 70 Gew.-% oder mehr enthält.

11. Dehnetikett gemäß einem der Ansprüche 1 bis 10, wobei das Verhältnis der Dicke der Oberflächenschichten zu der Dicke des Basisschichtteils 1:10 bis 1:1,5 beträgt.

12. Dehnetikett gemäß einem der Ansprüche 1 bis 11, wobei das Dehnetikett eine Restdehnung nach einer 60 %-Streckung von 15 % oder weniger aufweist.

13. Dehnetikett gemäß einem der Ansprüche 1 bis 12, wobei das Polyethylenharz in den Schichten E Ethylen-α-Olefin-Copolymere enthält und der Gehalt der von α-Olefin abgeleiteten Baueinheit, bezogen auf die Gesamtmenge des Ethylen-α-Olefin-Copolymers, größer als 0 Gew.-% bis 50 Gew.-% beträgt.

14. Dehnetikett gemäß einem der Ansprüche 1 bis 13, wobei die Schichten E jeweils eine Dicke von 0,5 µm oder mehr aufweisen.

15. Verfahren zum Herstellen eines Dehnetiketts zum Herstellen des Dehnetiketts gemäß einem der Ansprüche 2 bis 14, wobei das Verfahren umfasst
einen Schritt zum Herstellen der Dehnfolie,
wobei der Schritt zum Herstellen der Dehnfolie die Teilschritte einschließt:
(i) unabhängig Schmelzen eines Materials (a) zum Bilden der Schicht A, eines Materials (b) zum Bilden der Schicht B und eines Materials (c) zum Bilden der Oberflächenschichten;
(ii) Stapeln des Materials (a) und des Materials (b), die jeweils in dem ersten Teilschritt geschmolzen wurden, aufeinander, um eine Mehrschichtenanordnung zu bilden; und
(iii) Stapeln des in dem ersten Teilschritt geschmolzenen Materials (c) auf beiden Seiten der in dem zweiten Teilschritt gebildeten Mehrschichtenanordnung.

## Revendications

1. Étiquette étirable comprenant
un film étirable,
le film étirable incluant :
une partie formant couche de base; et
des couches superficielles disposées sur, ou dessus, les deux côtés de la partie formant couche de base, la partie formant couche de base comprenant
3 à 65 couches E, les couches E contenant chacune, de manière indépendante, une résine de polyéthylène présentant une teneur dans la couche d'au moins 60 % en poids et une masse volumique comprise entre 0,850 g/cm³ et 0,945 g/cm³,
chacune des couches E de la partie formant couche de base ayant une masse volumique différente de celle d'une autre couche E adjacente.

2. Étiquette étirable selon la revendication 1,
dans laquelle les couches E de la partie formant couche de base incluent :
au moins une couche A contenant une résine de polyéthylène présentant une teneur dans la couche d'au moins 60 % en poids et une masse volumique comprise entre 0,850 g/cm³ et 0,930 g/cm³ ; et
au moins une couche B contenant une résine de polyéthylène présentant une teneur dans la couche d'au moins 60 % en poids et une masse volumique inférieure ou égale à 0,945 g/cm³, la masse volumique de la couche B étant supérieure à la masse volumique de la couche A d'au moins 0,005 g/cm³, et
dans laquelle la partie formant couche de base comporte au moins deux interfaces, chacune entre une paire adjacente de la couche A et de la couche B.

3. Étiquette étirable selon la revendication 2,
dans laquelle les couches E de la partie formant couche de base incluent la couche A et la couche B disposées en ordre alterné, au nombre total de 3 à 65.

4. Étiquette étirable selon la revendication 2 ou 3,
dans laquelle le rapport de l'épaisseur de la(des) couche(s) A à l'épaisseur de la(des) couche(s) B est compris entre 1:10 et 10:1.

5. Étiquette étirable selon l'une quelconque des revendications 1 à 4,
dans laquelle les couches superficielles sont des couches contenant chacune une résine de polyéthylène présentant une teneur dans la couche d'au moins 60 % en poids et une masse volumique comprise entre 0,900 g/cm³ et 0,945 g/cm³.

6. Étiquette étirable selon la revendication 5,
dans laquelle la résine de polyéthylène dans les couches superficielles est un PEBDL obtenu par catalyse métallocène.

7. Étiquette étirable selon l'une quelconque des revendications 1 à 6,
dans laquelle les résines de polyéthylène dans les couches E sont des PEBDL obtenus par catalyse métallocène.

8. Étiquette étirable selon l'une quelconque des revendications 1 à 7,
dans laquelle la partie formant couche de base comprend 5 à 65 couches E.

9. Étiquette étirable selon l'une quelconque des revendications 1 à 8,
dans laquelle la partie formant couche de base a une masse volumique comprise entre 0,890 g/cm³ et 0,940 g/cm³.

10. Étiquette étirable selon l'une quelconque des revendications 1 à 9,
dans laquelle le film étirable contient une résine de polyéthylène en teneur d'au moins 70 % en poids.

11. Étiquette étirable selon l'une quelconque des revendications 1 à 10,
dans laquelle le rapport de l'épaisseur des couches superficielles à l'épaisseur de la partie formant couche de base est compris entre 1:10 et 1:1,5.

12. Étiquette étirable selon l'une quelconque des revendications 1 à 11,
dans laquelle l'étiquette étirable présente une déformation résiduelle après allongement de 60 % inférieure ou égale à 15 %.

13. Étiquette étirable selon l'une quelconque des revendications 1 à 12,
dans laquelle la résine de polyéthylène dans le couches E contient des copolymères d'éthylène-α-oléfine, et l'unité constitutive dérivée de l'a-oléfine, sur la base de la quantité totale de copolymères d'éthylène-α-oléfine, représente entre plus de 0 % en poids et 50 % en poids.

14. Étiquette étirable selon l'une quelconque des revendications 1 à 13,
dans laquelle les couches E ont chacune une épaisseur supérieure ou égale à 0,5 µm.

15. Procédé de fabrication d'une étiquette étirable pour fabriquer l'étiquette étirable selon l'une quelconque des revendications 2 à 14, le procédé comprenant
une étape de préparation du film étirable,
l'étape de préparation du film étirable incluant les sous-étapes consistant à :
(i) faire fondre, de manière indépendante, une matière (a) pour former la couche A, une matière (b) pour former la couche B et une matière (c) pour former les couches superficielles ;
(ii) superposer la matière (a) et la matière (b), fondues chacune dans la première sous-étape, l'une sur l'autre pour former un ensemble multicouche ; et
(iii) superposer la matière (c), fondue dans la première sous-étape, sur les deux côtés de l'ensemble multicouche formé dans la seconde sous-étape.
